# EUROPEAN PATENT APPLICATION

(11) **EP 4 808 188 A1**
(43) Date of publication of application: **16.09.2026**
(21) Application number: 24910238.5
(22) Date of filing: 24.10.2024
(51) Int. Cl.: H04W 24/02

(54) **COMMUNICATION METHOD, COMMUNICATION APPARATUS, AND COMMUNICATION SYSTEM**

(30) Priority: 25.12.2023 CN 202311804906
(71) Applicant: Huawei Technologies Co., Ltd., Shenzhen, Guangdong 518129 (CN)
(72) Inventor: ZHOU, Qingyang, Shenzhen, Guangdong 518129 (CN); ZHU, Haoren, Shenzhen, Guangdong 518129 (CN); WANG, Yuan, Shenzhen, Guangdong 518129 (CN)
(74) Representative: Huawei European IPR
(86) International application number: PCT/CN2024/127178
(87) International publication number: WO 2025/139297

(57) **Abstract**

This application provides a communication method, a communication apparatus, and a communication system. The method includes: obtaining RDMA information of a network function network element; and determining, based on the RDMA information of the network function network element, whether to use RDMA transmission. In a core network, a large amount of data is transmitted based on an RDMA protocol instead of an SBI protocol. Therefore, real-time data or real-time signaling transmitted on a service-based bus is not affected, which improves service quality. In addition, data transmission based on the RDMA protocol can further reduce CPU load of a core network element, and can satisfy a low-latency and high-throughput requirement for data transmission.

## Description

### CROSS-REFERENCE TO RELATED APPLICATIONS

This application claims priority to Chinese Patent Application No. 202311804906.4, filed with the China National Intellectual Property Administration on December 25, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of wireless communication technologies, and in particular, to a communication method, a communication apparatus, and a communication system.

### BACKGROUND

In current 5th generation (5th generation, 5G) user plane data transmission, data transmission between different nodes requires extensive involvement of a central processing unit (central processing unit, CPU) in a data transmission process. However, this data transmission scheme often suffers from a computer system bottleneck caused by a speed mismatch between a CPU and a memory, which is commonly referred to as a "memory wall." This is because a CPU speed becomes faster, while a memory speed has not been improving at the same pace. Data transmission between the CPU and the memory takes time. When the CPU needs to read or write a large amount of data, it may experience waiting cycles for memory access, thereby preventing the CPU from fully utilizing its computing capacity and affecting overall performance of a computer system. This data transmission approach, which requires extensive CPU involvement, is also referred to as a message passing through kernel (message passing through kernel) approach. This data transmission approach incurs high overheads in data movement and data copying due to the need to pass through the kernel. In addition, such a data transmission approach may be unable to satisfy requirements of some specific services for high throughput and low latency characteristics.

In addition, in a 5G network, data or signaling transmission is performed between core network elements through a service-based bus. When data or signaling is transmitted through the service-based bus, the data or the signaling is coupled together. That is, the service-based bus can be used for transmission of real-time signaling, real-time data, and non-real-time data at the same time. Therefore, transmission of a large amount of non-real-time data will occupy a pipeline for a long time, causing congestion for the real-time signaling and the real-time data, increasing transmission latency, and resulting in degraded service quality and poor user experience.

How to reduce CPU overheads of data transmission in a 5G network or a future network, meet requirements of services for high throughput and low latency characteristics, and improve service quality needs to be resolved.

### SUMMARY

This application provides a communication method, a communication apparatus, and a communication system, to reduce CPU overheads of data transmission in a 5G network or a future network, meet requirements of services for high throughput and low latency characteristics, and improve service quality.

According to a first aspect, an embodiment of this application provides a communication method. The method may be performed by a first network element or a module (for example, a chip) of the first network element. The first network element is a network data analytics function (network data analytics function, NWDAF) network element, a data collection coordination function (data collection coordination function, DCCF) network element, or a network repository function (network repository function, NRF) network element. The method includes: obtaining remote direct address access (remote direct memory access, RDMA) information of a network function network element; and determining, based on the RDMA information of the network function network element, whether to use RDMA transmission.

In the foregoing solution, in a core network, a large amount of data is transmitted based on an RDMA protocol instead of an SBI protocol. Therefore, real-time data or real-time signaling transmitted on a service-based bus is not affected, which improves service quality. In addition, data transmission based on the RDMA protocol can further reduce CPU load of a core network element, and can satisfy a low-latency and high-throughput requirement for data transmission.

In a possible implementation method, determining, based on the RDMA information of the network function network element, whether to use RDMA transmission includes: determining, based on the RDMA information and service information, whether to use RDMA transmission, where the service information includes at least one of the following: a service analytics identifier, a service type, or a task priority.

In the foregoing solution, whether there is a need to use RDMA transmission may be accurately determined based on the service information and the RDMA information of the network function network element. This helps improve communication efficiency and communication quality.

In a possible implementation method, determining, based on the RDMA information of the network function network element, whether to use RDMA transmission includes: determining, based on the RDMA information and status information of a CPU of the network function network element, whether to use RDMA transmission, where the status information of the CPU indicates a load status of the CPU.

In the foregoing solution, whether there is a need to use RDMA transmission may be accurately determined based on the service information and the RDMA information of the network function network element. This helps improve communication efficiency and communication quality.

In a possible implementation method, determining, based on the RDMA information of the network function network element, whether to use RDMA transmission includes: obtaining a load value of the CPU of the network function network element from the network function network element; and determining, based on the RDMA information and the load value of the CPU of the network function network element, whether to use RDMA transmission.

In the foregoing solution, whether there is a need to use RDMA transmission may be accurately determined based on the service information and the RDMA information of the network function network element. This helps improve communication efficiency and communication quality.

In a possible implementation method, the RDMA information includes one or more of the following information: whether the network function network element supports an RDMA protocol, an RDMA protocol type supported by the network function network element, or a bearer network type corresponding to the RDMA protocol type supported by the network function network element.

In a possible implementation method, the method further includes: establishing an RDMA connection between the first network element and the network function network element when determining to use RDMA transmission.

In a possible implementation method, establishing the RDMA connection between the first network element and the network function network element when determining to use RDMA transmission includes: when determining to use RDMA transmission, selecting, based on the service information and/or bearer network types corresponding to a plurality of RDMA protocol types supported by the network function network element, one RDMA protocol type from the plurality of RDMA protocol types supported by the network function network element, where the service information includes at least one of the following: the service analytics identifier, the service type, or the task priority; and establishing the RDMA connection between the first network element and the network function network element based on the selected RDMA protocol type.

In the foregoing solution, a most appropriate RDMA protocol type can be selected to establish an RDMA connection, thereby helping improve communication quality and communication efficiency.

In a possible implementation method, establishing the RDMA connection between the first network element and the network function network element includes: sending a connection establishment request to the network function network element based on a preset protocol type, where the connection establishment request includes RDMA connection establishment information of the first network element, and the preset protocol type is a service based interface (service based interface, SBI) protocol, a socket protocol, or a communication manager protocol; receiving a connection establishment response from the network function network element based on the preset protocol type, where the connection establishment response includes RDMA connection establishment information of the network function network element; and establishing the RDMA connection between the first network element and the network function network element based on the RDMA connection establishment information of the first network element and the RDMA connection establishment information of the network function network element.

In a possible implementation method, the first network element is a data collection coordination function network element, and the method further includes: establishing an RDMA connection between the data collection coordination function network element and a network data analytics function network element.

In a possible implementation method, the first network element is a data collection coordination function network element, and the method further includes: when determining to use RDMA transmission, notifying a network data analytics function network element to initiate RDMA connection establishment to a messaging framework adapter function network element, and notifying the messaging framework adapter function network element to initiate RDMA connection establishment to the network function network element.

In a possible implementation method, the first network element is a network repository function network element, and the method further includes: when determining to use RDMA transmission, sending a list of network data analytics function network elements that support RDMA transmission to a first network data analytics function network element, where the list of network data analytics function network elements includes identification information of one or more network data analytics function network elements that support RDMA transmission.

In a possible implementation method, the method further includes: sending an RDMA indication to the first network data analytics function network element, where the RDMA indication indicates that a second network data analytics function network element in the list of network data analytics function network elements is an aggregator network data analytics function network element, or indicates the first network data analytics function network element to establish an RDMA connection to the second network data analytics function network element.

In a possible implementation method, obtaining the RDMA information of the network function network element includes: sending a request message to a network repository function network element, where the request message includes indication information and identification information of the network function network element, and the indication information indicates to obtain the RDMA information of the network function network element; and receiving a response message from the network repository function network element, where the response message includes the RDMA information.

According to a second aspect, an embodiment of this application provides a communication method. The method may be performed by a network function network element or a module (for example, a chip) of the network function network element. The method includes: sending a registration request to a network repository function network element, where the registration request includes identification information of the network function network element, a type of the network function network element, and RDMA information of the network function network element; and receiving a registration response from the network repository function network element, where the registration response indicates a registration success or a registration failure.

In the foregoing solution, the network function network element may register the RDMA information of the network function network element with the network repository function network element, so that another network element may subsequently obtain the RDMA information of the network function network element from the network repository function network element, thereby helping quickly obtain the RDMA information of the NF.

In a possible implementation method, the registration request further includes status information of a CPU of the network function network element, and the status information of the CPU indicates a load status of the CPU.

In the foregoing solution, the network function network element may register the status information of the CPU of the network function network element with the network repository function network element, so that another network element may subsequently obtain the status information of the CPU of the network function network element from the network repository function network element, thereby helping quickly obtain the status information of the CPU of the NF.

In a possible implementation method, the method further includes: sending an update request to the network repository function network element when the status information of the CPU of the network function network element changes, where the update request includes updated status information of the CPU.

In the foregoing solution, latest status information of the CPU can be updated to the network repository network element in time.

In a possible implementation method, the method further includes: receiving a subscription request from a first network element, where the subscription request is for requesting a load value of the CPU of the network function network element; and sending the load value of the CPU of the network function network element to the first network element.

In a possible implementation method, the RDMA information includes one or more of the following information: whether the network function network element supports an RDMA protocol, an RDMA protocol type supported by the network function network element, or a bearer network type corresponding to the RDMA protocol type supported by the network function network element.

According to a third aspect, an embodiment of this application provides a communication apparatus. The apparatus may be a first network element or a module (for example, a chip) of the first network element. The apparatus has a function of implementing any implementation method of the first aspect. The function may be implemented by hardware, or may be implemented by hardware executing corresponding software. The hardware or the software includes one or more modules corresponding to the function.

According to a fourth aspect, an embodiment of this application provides a communication apparatus. The apparatus may be a network function network element or a module (for example, a chip) of the network function network element. The apparatus has a function of implementing any implementation method of the second aspect. The function may be implemented by hardware, or may be implemented by hardware executing corresponding software. The hardware or the software includes one or more modules corresponding to the function.

According to a fifth aspect, an embodiment of this application provides a communication apparatus, including a unit or a means (means) configured to perform steps in any one of the implementation methods of the first aspect and the second aspect.

According to a sixth aspect, an embodiment of this application provides a communication apparatus, including a processor and an interface circuit. The processor is configured to communicate with another apparatus through the interface circuit, and perform any one of the implementation methods of the first aspect and the second aspect. There are one or more processors.

According to a seventh aspect, an embodiment of this application provides a communication apparatus, including a processor. The processor is configured to invoke a program, to perform any one of the implementation methods of the first aspect and the second aspect. In addition, there may be one or more processors.

Optionally, the communication apparatus may further include a memory. The memory is coupled to the processor. The memory may be located inside the apparatus, or may be located outside the apparatus.

According to an eighth aspect, an embodiment of this application provides a communication apparatus, including a processor. When the apparatus runs, the processor executes computer instructions, to enable the apparatus to perform any one of the implementation methods of the first aspect and the second aspect.

Optionally, the communication apparatus may further include a memory, and the memory is configured to store the computer instructions.

According to a ninth aspect, an embodiment of this application further provides a computer program product. The computer program product includes a computer program or instructions. When the computer program or the instructions are run by a communication apparatus, any one of the implementation methods according to the first aspect and the second aspect is performed.

According to a tenth aspect, an embodiment of this application further provides a computer-readable storage medium. The computer-readable storage medium stores instructions. When the instructions are run on a communication apparatus, any one of the implementation methods of the first aspect and the second aspect is performed.

According to an eleventh aspect, an embodiment of this application further provides a chip system, including a processor, configured to perform any one of the implementation methods of the first aspect and the second aspect.

According to a twelfth aspect, an embodiment of this application further provides a communication system, including: a network function network element, configured to: send a registration request to a network repository function network element, where the registration request includes identification information of the network function network element, a type of the network function network element, and RDMA information of the network function network element; and receive a registration response from the network repository function network element, where the registration response indicates a registration success or a registration failure; and the network repository function network element, configured to: receive the registration request from the network repository function network element, and send the registration response to the network repository function network element.

### BRIEF DESCRIPTION OF DRAWINGS

FIG. 1 is a diagram of a 5G network architecture based on a service-based architecture;
FIG. 2 is a diagram of memory access when there is no DMA;
FIG. 3 is a diagram of memory access when there is DMA;
FIG. 4 is a diagram of memory access between different nodes in a conventional network;
FIG. 5 is a diagram of memory access between different nodes when there is RDMA;
FIG. 6(a) is a schematic flowchart of a communication method according to an embodiment of this application;
FIG. 6(b) is a schematic flowchart of a communication method according to an embodiment of this application;
FIG. 7 to FIG. 10 are schematic flowcharts of communication methods according to embodiments of this application; and
FIG. 11 and FIG. 12 are diagrams of communication apparatuses according to embodiments of this application.

### DESCRIPTION OF EMBODIMENTS

To cope with a challenge of a wireless broadband technology and maintain a leading position of a 3rd generation partnership project (3rd generation partnership project, 3GPP) network, the 3GPP standard group has formulated a next generation mobile communication network system (next generation system) architecture, which is referred to as a 5th generation (5th generation, 5G) network architecture. The architecture not only supports access to a 5G core network (core network, CN) by using a radio access technology (for example, a long term evolution (long term evolution, LTE) access technology and a 5G radio access network (radio access network, RAN) access technology) defined by the 3GPP standard group, but also supports access to a core network by using a non-3GPP (non-3GPP) access technology through a non-3GPP interworking function (non-3GPP interworking function, N3IWF) or a next generation access gateway (next generation packet data gateway, ngPDG).

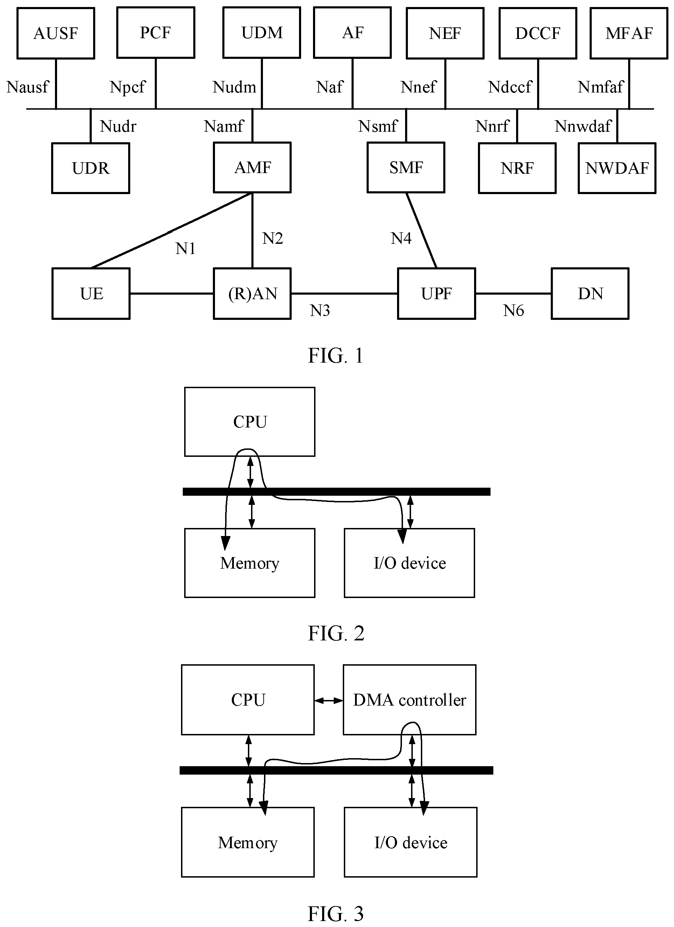

FIG. 1 is a diagram of a 5G network architecture based on a service-based architecture. The 5G network architecture shown in FIG. 1 may include an access network device and a core network device. A terminal device accesses a data network (data network, DN) via the access network device and the core network device. The core network device includes but is not limited to some or all of the following network elements: an authentication server function (authentication server function, AUSF) network element, a unified data management (unified data management, UDM) network element, a unified data repository (unified data repository, UDR) network element, a network repository function (network repository function, NRF) network element, a network exposure function (network exposure function, NEF) network element, an application function (application function, AF) network element, a policy control function (policy control function, PCF) network element, an access and mobility management function (access and mobility management function, AMF) network element, a session management function (session management function, SMF) network element, a user plane function (user plane function, UPF) network element, a network data analytics function (network data analytics function, NWDAF) network element, a data collection coordination function (data collection coordination function, DCCF) network element, and a messaging framework adapter function (messaging framework adapter function, MFAF) network element.

The terminal device may be user equipment (user equipment, UE), a mobile station, a mobile terminal device, or the like. The terminal device may be widely used in various scenarios, for example, device-to-device (device-to-device, D2D), vehicle to everything (vehicle to everything, V2X) communication, machine-type communication (machine-type communication, MTC), internet of things (internet of things, IoT), virtual reality, augmented reality, industrial control, autonomous driving, telemedicine, smart grid, smart home, smart office, smart wear, smart transportation, and smart city. The terminal device may be a mobile phone, a tablet computer, a computer having a wireless transceiver function, a wearable device, a vehicle, an urban air transportation vehicle (like an uncrewed aerial vehicle or a helicopter), a ship, a robot, a mechanical arm, a smart home device, or the like. For ease of description, in this application, an example in which a UE is used as the terminal device is used for description, and a UE that appears at any location subsequently may be replaced with a terminal device.

The access network device may be a radio access network device or a wired access network device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation NodeB (next generation NodeB, gNB) in a 5G mobile communication system, and a base station or a module or unit that completes some functions of the base station in a future mobile communication system, for example, a central unit (central unit, CU) or a distributed unit (distributed unit, DU). The untrusted non-3GPP access network device includes but is not limited to: an untrusted non-3GPP access gateway or N3IWF device, an untrusted wireless local area network (wireless local area network, WLAN) access point (access point, AP), a switch, or a router. The trusted non-3GPP access network device includes but is not limited to: a trusted non-3GPP access gateway, a trusted WLAN AP, a switch, or a router. The wireline access network device includes but is not limited to: a wireline access gateway (wireline access gateway), a fixed telephone network device, a switch, or a router. For ease of description, in this application, an example in which a base station is used as the access network device is used for description, and a base station that appears at any location subsequently may be replaced with an access network device.

The base station and the UE may be at fixed positions, or may be movable. The base station and the UE may be deployed on land, including an indoor or outdoor scenario, and a handheld or vehicle-mounted scenario; or may be deployed on water; or may be deployed on an airplane, a balloon, or an artificial satellite in the air. Application scenarios of the base station and the UE are not limited in embodiments of this application.

The AMF network element includes functions such as mobility management or access authentication/authorization. In addition, the AMF network element is further responsible for transferring a user policy between the UE and the PCF.

The SMF network element includes functions such as session management, execution of a control policy delivered by the PCF network element, UPF network element selection, or allocation of an internet protocol (internet protocol, IP) address of the UE.

The UPF network element includes functions such as user plane data forwarding, session/flow-level charging statistics, or bandwidth limitation.

The UDM network element includes functions such as subscription data management or user access authorization.

The UDR includes functions for accessing subscription data, policy data, application data, and other types of data.

The NEF network element is configured to support exposure of capabilities and events.

The AF network element transfers a requirement of an application side for a network side, for example, a QoS requirement or user status event subscription. The AF may be a third-party functional entity, or may be an operator-deployed application service, for example, an IP multimedia subsystem (IP Multimedia Subsystem, IMS) voice call business. The AF network element includes an AF network element in a core network (that is, an AF network element of an operator) and a third-party AF network element (for example, an application server of an enterprise).

The PCF network element includes policy control functions such as being responsible for charging at a session or business flow level, QoS bandwidth assurance and mobility management, and UE policy decision. The PCF network element includes an access and mobility management policy control function (access and mobility management policy control function, AM PCF) network element and a session management policy control function (session management PCF, SM PCF) network element. The AM PCF network element is configured to formulate an AM policy and a user policy for a UE. The AM PCF network element may also be referred to as a policy control function network element that provides a service for a UE (PCF for a UE). The SM PCF network element is configured to formulate a session management policy (session management policy, SM policy) for a session, and the SM PCF network element may also be referred to as a policy control function network element that provides a service for a protocol data unit (protocol data unit, PDU) session (PCF for a PDU session).

The NRF network element may be configured to provide a network element discovery function, and provide, based on a request of another network element, network element information corresponding to a network element type. The NRF network element further provides a network element management service, for example, network element registration, update, and deregistration, or network element status subscription and push.

The AUSF network element is responsible for authenticating a user, to determine whether the user or a device is allowed to access a network.

The NWDAF network element performs intelligent network data analytics and interacts with different entities to achieve different purposes, for example, collects network data from AMF network elements, SMF network elements, PCF network elements, UDM network elements, AF network elements, and operation, administration and management (operation, administration and management, OAM) entities based on data subscription and event response mechanisms, retrieves subscriber-related information from UDR network elements, retrieves network element entity related information from NRF network elements, provides analytics results for consumer network elements, and provides statistical results for consumer network elements, completes data collection and provides analytics results based on DCCF network elements, completes historical data collection and provides historical analytics results based on analytics data repository function (analytics data repository function, ADRF) network elements, and completes data collection and provides analytics results based on MFAF network elements.

The DCCF network element may collect required data, such as network data, user data, and analytics results, from data sources based on requests of consumer network elements. The DCCF network element can avoid sending repeated data requests to the data sources, thereby improving data collection efficiency and accuracy. In a data collection coordination process, the DCCF network element maintains an active data collection request record list to track data sources from which data is being collected currently. When a new data collection request is received, if a newly requested data source matches a requested data source in the active list, the DCCF may directly feed back collected data or simply modify an existing data subscription request; otherwise, the DCCF network element needs to initiate a new data subscription request.

The MFAF network element may perform operations such as filtering, aggregation, compression, and encryption on data based on a data collection or analytics requirement, to reduce data transmission overheads and protect data security. The MFAF network element may collaborate with the DCCF network element to implement dynamic data subscription and push, to improve real-time performance and reliability of data.

The DN is a network located outside an operator network. A plurality of DNs can access the operator network, and a plurality of services can be deployed on the DN, to provide services such as data and/or voice for a UE. For example, the DN is a private network of an intelligent factory, a sensor mounted in a workshop of the intelligent factory may be the UE, a control server of the sensor is deployed in the DN, and the control server may provide a service for the sensor. The sensor may communicate with the control server to obtain an instruction of the control server, transmit collected sensor data to the control server according to the instruction, and the like. For another example, the DN is an internal office network of a company, a mobile phone or a computer of an employee in the company may be the UE, and the mobile phone or the computer of the employee can access information, a data resource, or the like on the internal office network of the company.

In FIG. 1, Nausf, Npcf, Nudr, Nudm, Naf, Namf, Nsmf, Nnef, Nnrf, Nnwdaf, Ndccf, and Nmfaf are respectively service-based interfaces (service based interface, SBI) provided by the AUSF, the PCF, the UDR, the UDM, the AF, the AMF, the SMF, the NEF, the NRF, the NWDAF, the DCCF and the MFAF, and are for invoking corresponding service-based operations. N1, N2, N3, N4, and N6 are interface sequence numbers. Meanings of these interface sequence numbers are as follows:
(1) N1 is an interface between the AMF network element and the UE, and may be configured to transfer non-access stratum (non-access stratum, NAS) signaling (for example, including a QoS rule from the AMF network element) to the UE, and the like.
(2) N2 is an interface between the AMF network element and the base station, and may be configured to transfer radio bearer control information from a core network side to the base station, and the like.
(3) N3 is an interface between the base station and the UPF network element, and is mainly configured to transfer uplink and downlink user plane data between the base station and the UPF network element.
(4) N4 is an interface between the SMF network element and the UPF network element, and may be configured to transfer information between a control plane and a user plane, including delivery of a forwarding rule, a QoS rule, a traffic statistics rule, and the like from the control plane to the user plane, and reporting of user plane information.
(5) N6 is an interface between the UPF network element and the DN, and is configured to transfer uplink and downlink user data flows between the UPF network element and the DN.

The network function network elements in the architecture shown in FIG. 1 are connected through service-based buses, and interact with each other through service-based interfaces. An advantage of the service-based bus lies in enhancing network flexibility, openness, scalability, and intelligence, enabling support for diverse service scenarios and requirements. The service-based bus may be configured to transmit various types of data and signaling, for example, may be configured to transmit delay-sensitive real-time signaling (for example, signaling invoked by using a service-based interface between network function network elements), may be configured to transmit delay-sensitive real-time data (for example, real-time artificial intelligence inference data), or may be configured to transmit non-real-time data (for example, offline artificial intelligence training data). In addition, when the data or the signaling is transmitted through the service-based bus, the data or the signaling is coupled together. That is, the service-based bus can be used for transmission of real-time signaling, real-time data, and non-real-time data at the same time.

It may be understood that the foregoing network elements or functions may be network elements in a hardware device, or may be software functions running on dedicated hardware or virtualized functions instantiated on a platform (for example, a cloud platform). Optionally, the network element or function may be implemented by one device, may be jointly implemented by a plurality of devices, or may be a functional module in one device. This is not specifically limited in embodiments of this application.

The network data analytics function network element, the data collection coordination function network element, the messaging framework adapter function network element, and the network repository function network element in this application may be respectively the NWDAF network element, the DCCF network element, the MFAF network element, and the NRF network element in FIG. 1, or may be network elements that have functions of the NWDAF network element, the DCCF network element, the MFAF network element, and the NRF network element in a future communication network such as a 6G network. This is not limited in this application. In embodiments of this application, an example in which the NWDAF network element, the DCCF network element, the MFAF network element, and the NRF network element are respectively the network data analytics function network element, the data collection coordination function network element, the messaging framework adapter function network element, and the network repository function network element is used for description, and the NWDAF network element, the DCCF network element, the MFAF network element, and the NRF network element are respectively referred to as an NWDAF, a DCCF, an MFAF, and an NRF.

For ease of understanding of content of this application, the following first describes background technologies in this application.

### 1. Direct memory access (direct memory access, DMA)

DMA refers to a process in which an external device may directly read and write a memory without participation of a central processing unit (central processing unit, CPU).

FIG. 2 is a diagram of memory access when there is no DMA. It is assumed that an input/output (input/output, I/O) device is a common network interface card. To obtain, from a memory, data that needs to be sent, assemble the data into a data packet, and send the data packet to a physical link, the network interface card needs to notify a CPU of a data request of the network interface card through a bus. Then, the CPU copies, based on the data request, corresponding data in a memory buffer to an internal register of the CPU, and then copies the data to storage space of the I/O device. If there is a large amount of data, the CPU is busy migrating data for a long time and cannot be used for other tasks. The primary role of the CPU is computation rather than data copying. Therefore, such data copying work wastes a computational capacity of the CPU. A DMA mechanism is designed to offload the CPU and allow it to focus on more meaningful tasks.

FIG. 3 is a diagram of memory access when there is DMA. As can be seen, a DMA controller is attached to a bus, which is specifically designed for reading from and writing to a memory. When a network interface card intends to copy data from the memory, except for some necessary control commands, the entire data copying process is completed by the DMA controller. This process is the same as the CPU copying shown in FIG. 2, except that in the DMA approach, data in the memory is first copied to a register inside the DMA controller via the bus, and then copied to storage space of an I/O device. Except for keeping track of starting and ending of this process, a CPU can spend its time doing other things. The DMA controller may be usually disposed inside the I/O device. In other words, the I/O device includes both a module responsible for data receiving and sending and a DMA module.

### 2. Remote direct memory access (remote direct memory access, RDMA)

RDMA can implement direct access of a local node to a memory of a remote node. The direct means that a remote memory can be read and written by bypassing a complex transmission control protocol (transmission control protocol, TCP) /IP network protocol stack of a conventional Ethernet, just like accessing a local memory. The peer end is unaware of this process, and most operations of the read and write process are completed by hardware instead of software.

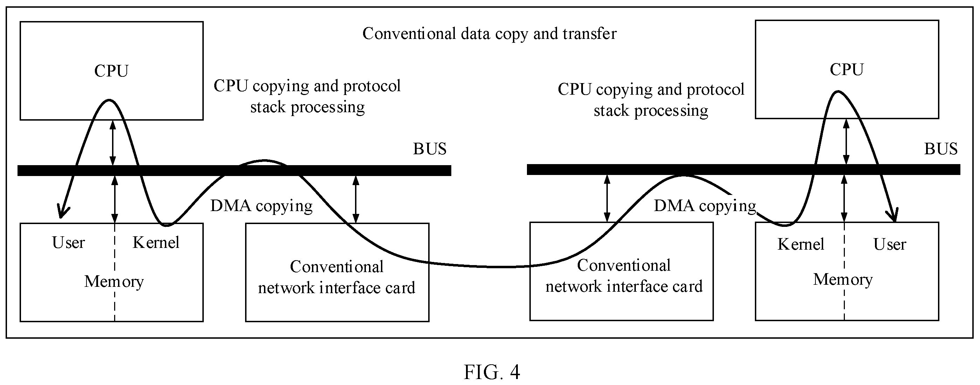

FIG. 4 is a diagram of memory access between different nodes in a conventional network. In a conventional network, "node A sends a message to node B" is actually "transferring a segment of data in a memory of node A to a memory of node B through a network link". This process requires command and control of a CPU, including network interface card control, interrupt processing, and packet encapsulation and parsing, regardless of a transmitter or a receiver. Data, in user space of a memory, of a node on the left in FIG. 4 needs to be copied to a buffer in kernel space by a CPU, and then can be accessed by a network interface card. During this process, the data traverses a software-implemented TCP/IP protocol stack, where headers and checksums for various layers, such as TCP and IP headers, are added. The network interface card copies the data in the kernel to an internal buffer of the network interface card through DMA, processes the data, and sends the processed data to a peer end through a physical link. After receiving the data, a reverse process takes place at the peer end: the data is copied from internal storage space of a network interface card to a buffer in kernel space of a memory through DMA, and then a CPU parses the data through a TCP/IP protocol stack, extracts the data, and copies the data to user space. It can be learned that even with the DMA technology, the foregoing process still has a strong dependency on the CPU.

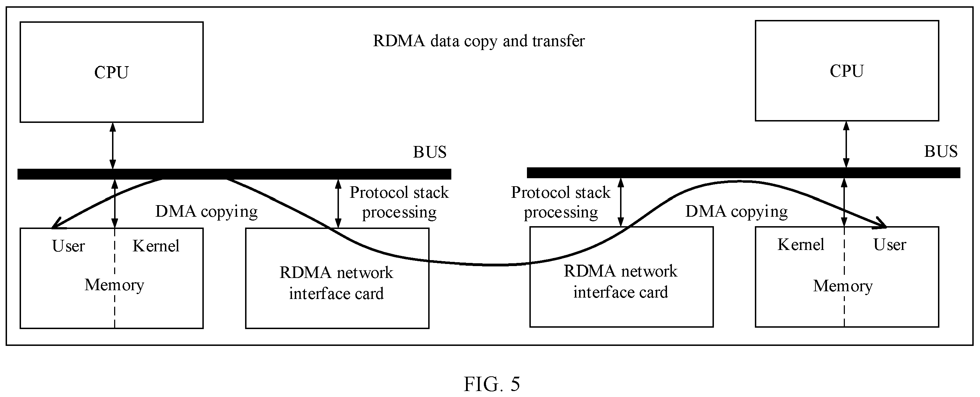

FIG. 5 is a diagram of memory access between different nodes when there is RDMA. Similarly, in a case of copying a segment of data in a local memory to a peer memory, when an RDMA technology is used, CPUs of both parties almost do not need to participate in a data transmission process (only participate in a control plane). A local RDMA network interface card directly performs DMA copying of data from a user space of a memory to an internal storage space of the RDMA network interface card, after which the hardware assembles packets of various layers and transmits the packets to a peer RDMA network interface card through a physical link. After receiving the data, the peer RDMA network interface card strips packet headers and checksums of respective layers, and directly copies the data to a user space of a memory through DMA.

The RDMA technology has the following advantages:
(1) Zero-copy: There is no need to copy data back and forth between user space and kernel space.
(2) Kernel bypass: I/O data flows can bypass the kernel. That is, data can be prepared at a user layer and hardware can be notified to prepare for sending and receiving, avoiding overheads of system calls and context switches.
(3) CPU offloading: A memory can be read from or written to without involving a CPU of a remote node (provided that a "key (key)" for accessing a relevant segment of memory on a remote side is held). In effect, packet encapsulation and parsing are offloaded to the hardware. In contrast, traditional Ethernet communication necessitates CPU participation from both sides for parsing packets at each layer. When data volumes are substantial and interactions are frequent, this constitutes a considerable burden on the CPU, occupying CPU compute resources that could otherwise be allocated to more meaningful tasks.

Therefore, the RDMA technology can achieve high throughput and low latency in network transmission while reducing CPU load.

The RDMA protocol stack has a plurality of versions, which are IB->RoCEv1->iWARP->RoCEv2 in chronological order. IB is short for Infiniband, RoCE is short for RDMA over converged ethernet (RDMA over converged ethernet), and iWARP is short for internet wide area RDMA protocol (internet wide area RDMA protocol). RoCE includes a version 1 (v1) and a version 2 (v2). It should be noted that herein, for example, the RDMA protocol includes the IB protocol, the RoCEv1 protocol, the iWARP protocol, and the RoCEv2 protocol. In actual application, another type of protocol may be further included. This is not limited in this application.

RDMA uses a work queue to queue and execute a series of service requests. The work queue is referred to as a queue pair (queue pair, QP) in RDMA. In the queue pair, one queue is used to send an operation, and the other queue is used to receive an operation. Usually, a sending work queue stores instructions that cause data to be transferred between a memory of a consumer and a memory of another consumer, while a receiving work queue stores instructions about where to place data received from another consumer. The another consumer is referred to as a remote consumer, even if they may be on a same node. RDMA supports both connection-oriented and datagram-oriented services. For connection-oriented services, each QP is associated with only one remote user. In this case, a QP context is configured as an identifier of a queue pair of the remote consumer. The remote consumer is identified by a port and a queue pair number (queue pair number, QPN). The port is identified by a local identifier (local ID, LID), or by a local identifier and a global identifier (global ID, GID).

RDMA includes but is not limited to the following four connection types:
(1) Reliable connection (reliable connection, RC): provides reliable message-oriented transmission. QPs at both ends of communication are bound one by one. This is the most common RDMA connection type.
(2) Unreliable connection (unreliable connection, UC): provides unreliable message-oriented transmission. QPs at both ends of communication are bound one by one.
(3) Unreliable datagram (unreliable datagram, UD): provides unreliable message-oriented transmission. QPs at both ends of communication are not bound one by one. This transmission type is similar to that in the user datagram protocol (user datagram protocol, UDP).
(4) Reliable datagram (reliable datagram, RD): Currently, most network interface card vendors do not support the RD.

### 3. User-plane data transmission mode

The user plane is an important part of a 5G network, and is responsible for transmitting user data. The user plane involves data transmission from UE to a network and data transmission from the network to the UE.

User plane interfaces are mainly an N3 interface and an N9 interface. The N3 interface is an interface between a base station and a UPF, and uses the general packet radio service (general packet radio service, GPRS) tunneling protocol user plane (GPRS tunnelling protocol user plane, GTP-U) protocol for tunnel transmission of user data. The N3 interface is mainly for transmitting uplink and downlink user plane data between the base station and the UPF. The N9 interface is an interface between different UPFs. In mobility scenarios, an intermediate UPF (intermediate UPF, I-UPF) may be inserted between UE and a PDU session anchor (PDU session anchor, PSA) UPF for traffic forwarding. The GTP-U protocol is used for user-plane packet transmission between the two UPFs.

The GTP-U protocol is for transmitting user plane data in a mobile communication network. Efficient data transmission is performed between different network nodes through tunnel establishment and protocol encapsulation. A specific transmission mode used varies according to different network versions and network nodes.

In current 5G user plane data transmission, a data transmission mode between different nodes (for example, a base station and a UPF) is similar to the data transmission mode shown in FIG. 4, and requires extensive CPU involvement in a data transmission process. However, this data transmission scheme often suffers from a computer system bottleneck caused by a speed mismatch between a CPU and a memory, which is commonly referred to as a "memory wall." This is because a CPU speed becomes faster, while a memory speed has not been improving at the same pace. Data transmission between the CPU and the memory takes time. When the CPU needs to read or write a large amount of data, it may experience waiting cycles for memory access, thereby preventing the CPU from fully utilizing its computing capacity and affecting overall performance of a computer system. This data transmission approach, which requires extensive CPU involvement, is also referred to as a message passing through kernel (Message passing through kernel) approach. This data transmission approach incurs high overheads in data movement and data copying due to the need to pass through the kernel. In addition, such a data transmission approach may be unable to satisfy requirements of some specific services for high throughput and low latency characteristics.

In addition, based on the foregoing descriptions, when data or signaling is transmitted through the service-based bus shown in FIG. 1, the data or the signaling is coupled together. That is, the service-based bus can be used for transmission of real-time signaling, real-time data, and non-real-time data at the same time. Therefore, transmission of a large amount of non-real-time data will occupy a pipeline for a long time, causing congestion for the real-time signaling and the real-time data, increasing transmission latency, resulting in degraded service quality and poor user experience.

This application provides a corresponding solution to reduce CPU overheads of data transmission in a 5G network or a future network, meet a requirement of a service for high throughput and low latency characteristics, and improve service quality.

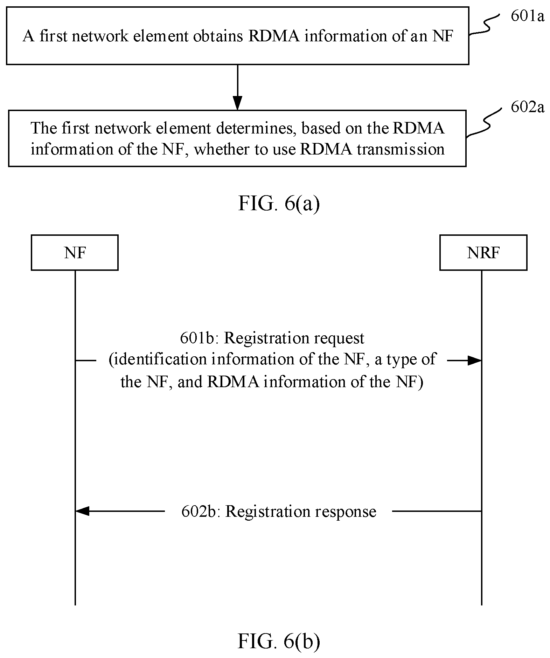

FIG. 6(a) is a schematic flowchart of a communication method according to an embodiment of this application. The method is performed by a first network element or a module (for example, a chip) of the first network element. The following uses an example in which the first network element performs the method for description. The first network element may be an NWDAF, a DCCF, or an NRF.

The method includes the following steps.

Step 601a: The first network element obtains RDMA information of an NF.

The NF herein may be any network element in a 5G network or a future communication network, for example, may be a UPF, an SMF, a PCF, an AMF, an NEF or an AF.

The RDMA information includes one or more of the following information: whether the NF supports an RDMA protocol, an RDMA protocol type (for example, an IB protocol, an iWARP protocol, a RoCEv1 protocol, a RoCEv2 protocol, or another type of protocol) supported by the NF, or a bearer network type corresponding to the RDMA protocol type supported by the NF. If the NF supports the iWARP protocol, the RoCEv1 protocol, or the RoCEv2 protocol, a bearer network type required by the NF is an Ethernet. If the NF supports the IB protocol, a bearer network type required by the NF is an IB dedicated network.

In an implementation method, if the first network element is an NWDAF or a DCCF, the first network element may obtain the RDMA information of the NF from an NRF. For example, the first network element sends a request message to the NRF, where the request message includes indication information and identification information of the NF. The indication information indicates to obtain the RDMA information of the NF. The NRF locally obtains the RDMA information of the NF based on the identification information of the NF, and then sends a response message to the first network element, where the response message includes the RDMA information.

In another implementation method, if the first network element is an NRF, the NRF may locally obtain the RDMAinformation of the NF.

The RDMA information of the NF stored in the NRF may be registered by the NF with the NRF in advance. For a procedure of registering with the NRF by the NF, refer to the following embodiment in FIG. 6(b).

Step 602a: The first network element determines, based on the RDMA information of the NF, whether to use RDMA transmission.

Specifically, the NWDAF determines, based on the RDMA information and service information, based on the RDMA information and status information of a CPU (or load value of the CPU) of the NF, or based on the RDMA information, the service information, and the status information of the CPU (or the load value of the CPU), whether to use RDMA transmission.

The service information includes at least one of the following: a service analytics identifier (Analytics ID), a service type (for example, an inference task or a training task), or a task priority. The analytics identifier indicates a to-be-analyzed service. The task priority may be represented by a priority value, or may be represented by specified completion time.

The status information of the CPU indicates a CPU load status of the NF. For example, when CPU usage is less than 30%, a CPU status is Good; when the CPU usage is greater than or equal to 30% and less than 80%, the CPU status is Normal; when the CPU usage is greater than or equal to 80%, the CPU status is Poor.

The load value of the CPU indicates a load level of the NF. For example, the load value of the CPU is 50%, 60%, or the like. An example in which the first network element is an NWDAF, a DCCF, or an NRF is used below for description.

Case 1: The first network element is the NWDAF.

For example, when the NWDAF needs to collect data from the NF, if the NWDAF determines, based on the service information, that a large amount of data needs to be transmitted between the NWDAF and the NF, and determines, based on the RDMA information, that an RDMA connection can be established between the NWDAF and the NF, the NWDAF determines to use RDMA transmission. Subsequently, after the RDMA connection is established between the NWDAF and the NF, a large amount of data is transmitted between the NWDAF and the NF based on the RDMA protocol instead of an SBI protocol. Therefore, real-time data or real-time signaling transmitted on a service-based bus is not affected. In addition, data transmission based on the RDMA protocol can further reduce CPU load of the NWDAF and the NF, and can satisfy a low-latency and high-throughput requirement for data transmission.

For another example, when the NWDAF needs to collect data from the NF, if the NWDAF determines, based on the service information, that data needs to be urgently transmitted between the NWDAF and the NF, and determines, based on the RDMA information, that an RDMA connection can be established between the NWDAF and the NF, the NWDAF determines to use RDMA transmission. Subsequently, after the RDMA connection is established between the NWDAF and the NF, data transmission is performed between the NWDAF and the NF based on the RDMA protocol. Because data transmission based on the RDMA protocol does not pass through the kernel, a data transmission speed is high, and an urgent service requirement can be satisfied. In addition, data transmission based on the RDMA protocol can further reduce CPU load of the NWDAF and the NF, and can satisfy a low-latency and high-throughput requirement for data transmission.

For another example, when the NWDAF needs to collect data from the NF, if the NWDAF determines, based on the status information of the CPU (or the load value of the CPU) of the NF, that current CPU load of the NF is heavy, and determines, based on the RDMAinformation, that an RDMA connection can be established between the NWDAF and the NF, the NWDAF determines to use RDMA transmission. Subsequently, after the RDMA connection is established between the NWDAF and the NF, data transmission is performed between the NWDAF and the NF based on the RDMA protocol, so that CPU load of the NWDAF and the NF can be reduced, and a low-latency and high-throughput requirement for data transmission can be met.

For another example, when the NWDAF needs to collect data from the NF, if the NWDAF determines, based on the service information, that a small amount of data needs to be transmitted between the NWDAF and the NF, but determines, based on the status information of the CPU (or the load value of the CPU) of the NF, that current CPU load of the NF is heavy, and determines, based on the RDMA information, that an RDMA connection can be established between the NWDAF and the NF, the NWDAF determines to use RDMA transmission. Subsequently, after the RDMA connection is established between the NWDAF and the NF, data transmission is performed between the NWDAF and the NF based on the RDMA protocol, so that CPU load of the NWDAF and the NF can be reduced, and a low-latency and high-throughput requirement for data transmission can be met.

For another example, when the NWDAF needs to collect data from the NF, if the NWDAF determines, based on the status information of the CPU (or the load value of the CPU) of the NF, that current CPU load of the NF is light, but determines, based on the service information, that a large amount of data needs to be transmitted between the NWDAF and the NF, and determines, based on the RDMA information, that an RDMA connection can be established between the NWDAF and the NF, the NWDAF determines to use RDMA transmission. Subsequently, after the RDMA connection is established between the NWDAF and the NF, a large amount of data is transmitted between the NWDAF and the NF based on the RDMA protocol instead of an SBI protocol. Therefore, real-time data or real-time signaling transmitted on a service-based bus is not affected. In addition, data transmission based on the RDMA protocol can further reduce CPU load of the NWDAF and the NF, and can satisfy a low-latency and high-throughput requirement for data transmission.

It should be noted that, for the case 1, when it is determined to use RDMA transmission, the RDMA connection between the NWDAF and the NF is established. If the NF supports a plurality of RDMA protocol types, the NWDAF may select, based on the service information and/or bearer network types corresponding to the plurality of RDMA protocol types supported by the NF, one RDMA protocol type from the plurality of RDMA protocol types supported by the NF.

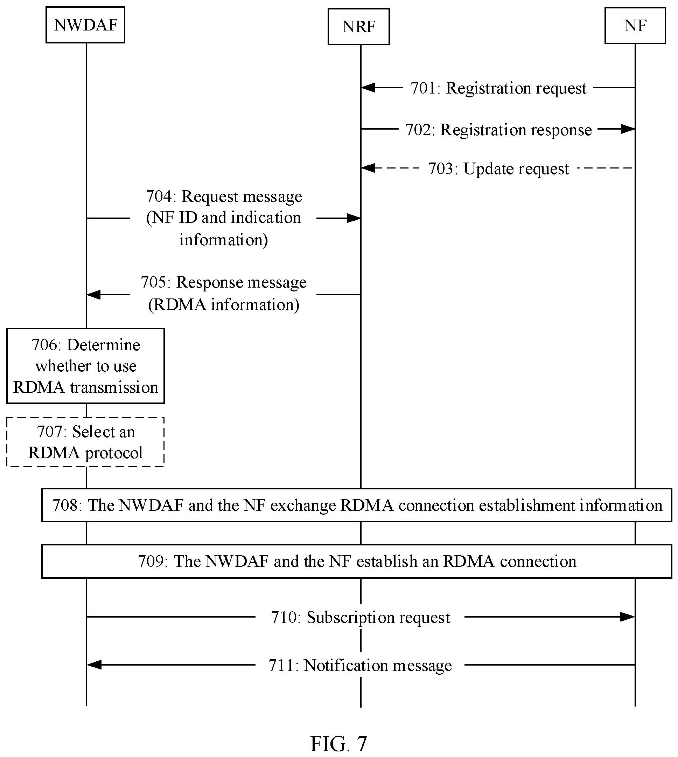

The following embodiment shown in FIG. 7 is a specific example of the case 1.

Case 2: The first network element is the DCCF.

For example, when the DCCF needs to collect data from the NF, if the DCCF determines, based on the service information, that a large amount of data needs to be transmitted between the DCCF and the NF, and determines, based on the RDMA information, that an RDMA connection can be established between the DCCF and the NF, the DCCF determines to use RDMA transmission. Subsequently, after the RDMA connection is established between the DCCF and the NF and an RDMA connection is established between the DCCF and an NWDAF, a large amount of data is transmitted between the DCCF and the NF and between the DCCF and the NWDAF based on the RDMA protocol instead of an SBI protocol. Therefore, real-time data or real-time signaling transmitted on a service-based bus is not affected. In addition, data transmission based on the RDMA protocol can further reduce CPU load of the DCCF, the NWDAF, and the NF, and can satisfy a low-latency and high-throughput requirement for data transmission.

For another example, when the DCCF needs to collect data from the NF, if the DCCF determines, based on the service information, that data needs to be urgently transmitted between the DCCF and the NF, and determines, based on the RDMA information, that an RDMA connection can be established between the DCCF and the NF, the DCCF determines to use RDMA transmission. Subsequently, after the RDMA connection is established between the DCCF and the NF and an RDMA connection is established between the DCCF and an NWDAF, data is transmitted between the DCCF and the NF and between the DCCF and the NWDAF based on the RDMA protocol. Because data transmission based on the RDMA protocol does not pass through the kernel, a data transmission speed is high, and an urgent service requirement can be satisfied. In addition, data transmission based on the RDMA protocol can further reduce CPU load of the DCCF, the NWDAF, and the NF, and can satisfy a low-latency and high-throughput requirement for data transmission.

For another example, when the DCCF needs to collect data from the NF, if the DCCF determines, based on the status information of the CPU (or the load value of the CPU) of the NF, that current CPU load of the NF is heavy, and determines, based on the RDMA information, that an RDMA connection can be established between the DCCF and the NF, the DCCF determines to use RDMA transmission. Subsequently, after the RDMA connection is established between the DCCF and the NF and an RDMA connection is established between the DCCF and an NWDAF, data is transmitted between the DCCF and the NF and between the DCCF and the NWDAF based on the RDMA protocol, so that CPU load of the DCCF, the NWDAF, and the NF can be reduced, and a low-latency and high-throughput requirement for data transmission can be met.

For another example, when the DCCF needs to collect data from the NF, if the DCCF determines, based on the service information, that a small amount of data needs to be transmitted between the DCCF and the NF, but determines, based on the status information of the CPU (or the load value of the CPU) of the NF, that current CPU load of the NF is heavy, and determines, based on the RDMA information, that an RDMA connection can be established between the DCCF and the NF, the DCCF determines to use RDMA transmission. Subsequently, after the RDMA connection is established between the DCCF and the NF and an RDMA connection is established between the DCCF and an NWDAF, data is transmitted between the DCCF and the NF and between the DCCF and the NWDAF based on the RDMA protocol, so that CPU load of the DCCF, the NWDAF, and the NF can be reduced, and a low-latency and high-throughput requirement for data transmission can be met.

For another example, when the DCCF needs to collect data from the NF, if the DCCF determines, based on the status information of the CPU (or the load value of the CPU) of the NF, that current CPU load of the NF is light, but determines, based on the service information, that a large amount of data needs to be transmitted between the DCCF and the NF, and determines, based on the RDMA information, that an RDMA connection can be established between the DCCF and the NF, the DCCF determines to use RDMA transmission. Subsequently, after the RDMA connection is established between the DCCF and the NF and an RDMA connection is established between the DCCF and an NWDAF, a large amount of data is transmitted between the DCCF and the NF and between the DCCF and the NWDAF based on the RDMA protocol instead of an SBI protocol. Therefore, real-time data or real-time signaling transmitted on a service-based bus is not affected. In addition, data transmission based on the RDMA protocol can further reduce CPU load of the DCCF, the NWDAF, and the NF, and can satisfy a low-latency and high-throughput requirement for data transmission.

For another example, when the DCCF needs to collect data from the NF, if the DCCF determines, based on the service information, that a large amount of data needs to be transmitted between an NWDAF and the NF, and determines, based on the RDMA information, that an RDMA connection can be established between an MFAF and the NF and between the NWDAF and the MFAF, the DCCF determines to use RDMA transmission. Therefore, the DCCF may notify the NWDAF to initiate establishment of the RDMA connection to the MFAF, and notify the MFAF to initiate establishment of the RDMA connection to the NF. Subsequently, after the RDMA connection is established between the MFAF and the NF and an RDMA connection is established between the MFAF and an NWDAF, a large amount of data is transmitted between the MFAF and the NF and between the MFAF and the NWDAF based on the RDMA protocol instead of an SBI protocol. Therefore, real-time data or real-time signaling transmitted on a service-based bus is not affected. In addition, data transmission based on the RDMA protocol can further reduce CPU load of the MFAF, the NWDAF, and the NF, and can satisfy a low-latency and high-throughput requirement for data transmission.

For another example, when the DCCF needs to collect data from the NF, if the DCCF determines, based on the service information, that data needs to be urgently transmitted between an NWDAF and the NF, and determines, based on the RDMA information, that an RDMA connection can be established between an MFAF and the NF and between the NWDAF and the MFAF, the DCCF determines to use RDMA transmission. Therefore, the DCCF may notify the NWDAF to initiate establishment of the RDMA connection to the MFAF, and notify the MFAF to initiate establishment of the RDMA connection to the NF. Subsequently, after the RDMA connection is established between the MFAF and the NF and an RDMA connection is established between the MFAF and an NWDAF, data is transmitted between the MFAF and the NF and between the MFAF and the NWDAF based on the RDMA protocol. Because data transmission based on the RDMA protocol does not pass through the kernel, a data transmission speed is high, and an urgent service requirement can be satisfied. In addition, data transmission based on the RDMA protocol can further reduce CPU load of the MFAF, the NWDAF, and the NF, and can satisfy a low-latency and high-throughput requirement for data transmission.

For another example, when the DCCF needs to collect data from the NF, if the DCCF determines, based on the status information of the CPU (or the load value of the CPU) of the NF, that current CPU load of the NF is heavy, and determines, based on the RDMA information, that an RDMA connection can be established between an MFAF and the NF and between an NWDAF and the MFAF, the DCCF determines to use RDMA transmission. Therefore, the DCCF may notify the NWDAF to initiate establishment of the RDMA connection to the MFAF, and notify the MFAF to initiate establishment of the RDMA connection to the NF. Subsequently, after the RDMA connection is established between the MFAF and the NF and an RDMA connection is established between the MFAF and an NWDAF, data is transmitted between the MFAF and the NF and between the MFAF and the NWDAF based on the RDMA protocol, so that CPU load of the MFAF, the NWDAF, and the NF can be reduced, and a low-latency and high-throughput requirement for data transmission can be met.

For another example, when the DCCF needs to collect data from the NF, if the DCCF determines, based on the service information, that a small amount of data needs to be transmitted between an NWDAF and the NF, but determines, based on the status information of the CPU (or the load value of the CPU) of the NF, that current CPU load of the NF is heavy, and determines, based on the RDMA information, that an RDMA connection can be established between an MFAF and the NF and between the NWDAF and the MFAF, the DCCF determines to use RDMA transmission. Therefore, the DCCF may notify the NWDAF to initiate establishment of the RDMA connection to the MFAF, and notify the MFAF to initiate establishment of the RDMA connection to the NF. Subsequently, after the RDMA connection is established between the MFAF and the NF and an RDMA connection is established between the MFAF and an NWDAF, data is transmitted between the MFAF and the NF and between the MFAF and the NWDAF based on the RDMA protocol, so that CPU load of the MFAF, the NWDAF, and the NF can be reduced, and a low-latency and high-throughput requirement for data transmission can be met.

For another example, when the DCCF needs to collect data from the NF, if the DCCF determines, based on the status information of the CPU (or the load value of the CPU) of the NF, that current CPU load of the NF is light, but determines, based on the service information, that a large amount of data needs to be transmitted between an NWDAF and the NF, and determines, based on the RDMA information, that an RDMA connection can be established between an MFAF and the NF and between the NWDAF and the MFAF, the DCCF determines to use RDMA transmission. Therefore, the DCCF may notify the NWDAF to initiate establishment of the RDMA connection to the MFAF, and notify the MFAF to initiate establishment of the RDMA connection to the NF. Subsequently, after the RDMA connection is established between the MFAF and the NF and an RDMA connection is established between the MFAF and an NWDAF, a large amount of data is transmitted between the MFAF and the NF and between the MFAF and the NWDAF based on the RDMA protocol instead of an SBI protocol. Therefore, real-time data or real-time signaling transmitted on a service-based bus is not affected. In addition, data transmission based on the RDMA protocol can further reduce CPU load of the MFAF, the NWDAF, and the NF, and can satisfy a low-latency and high-throughput requirement for data transmission.

It should be noted that, for the case 2, when it is determined to use RDMA transmission, the RDMA connection between the DCCF and the NF is established, and the RDMA connection between the DCCF and the NWDAF is established. If the NF supports a plurality of RDMA protocol types, the NWDAF may select, based on the service information and/or bearer network types corresponding to the plurality of RDMA protocol types supported by the NF, one RDMA protocol type from the plurality of RDMA protocol types supported by the NF.

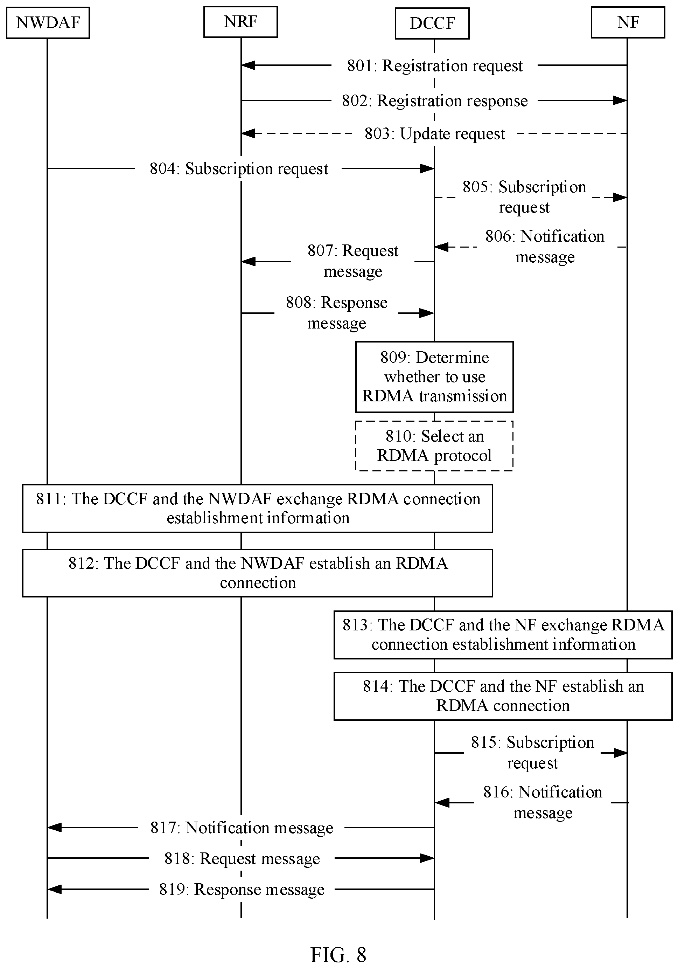

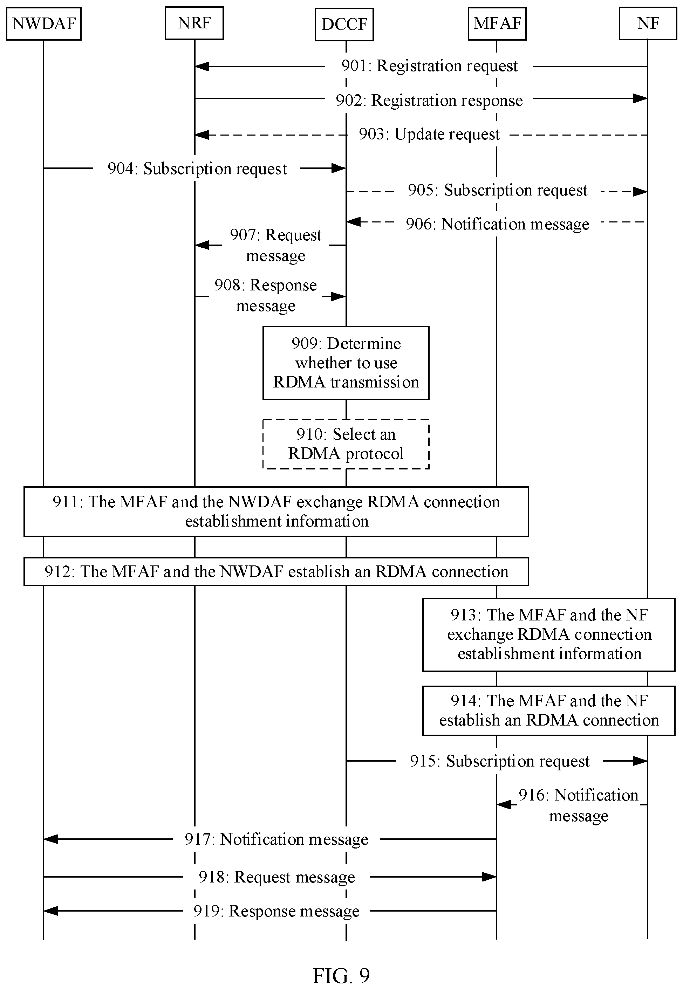

The following embodiments shown in FIG. 8 and FIG. 9 are specific examples of the case 2.

Case 3: The first network element is the NRF.

For example, the NRF determines, based on RDMA information of a first NWDAF and the service information, based on the RDMA information of the first NWDAF and status information of a CPU (or a load value of the CPU) of the first NWDAF, or based on the RDMA information of the first NWDAF, the service information, and the status information of the CPU of the first NWDAF, whether to use RDMA transmission. The service information includes at least one of the following: the service analytics identifier (Analytics ID), the service type (for example, an inference task or a training task), or the task priority. The analytics identifier indicates a to-be-analyzed service. The task priority may be represented by a priority value, or may be represented by specified completion time.

For example, when determining to use RDMA transmission, the NRF may further send, to the first NWDAF, a list of NWDAFs that support RDMA transmission, where the list of NWDAFs includes identification information of one or more NWDAFs that support RDMA transmission. Therefore, the first NWDAF may establish an RDMA connection to one or more NWDAFs in the list of NWDAFs, and perform data transmission based on the RDMA connection. Because a large amount of data is transmitted between different NWDAFs based on the RDMA protocol instead of an SBI protocol. Therefore, real-time data or real-time signaling transmitted on a service-based bus is not affected. In addition, data transmission based on the RDMA protocol can further reduce CPU load of the NWDAF, and can satisfy a low-latency and high-throughput requirement for data transmission.

Optionally, the NRF may send an RDMA indication to the first NWDAF. The RDMA indication indicates that a second NWDAF in the list of NWDAFs is an aggregator NWDAF, or indicates the first NWDAF to establish an RDMA connection to the second NWDAF. Therefore, the first NWDAF may establish the RDMA connection to the second NWDAF, and then the second NWDAF establishes an RDMA connection to another NWDAF in the list of NWDAFs, so that the second NWDAF obtains data from the plurality of NWDAFs, aggregates the data, and sends the aggregated data to the first NWDAF. A large amount of data is transmitted between different NWDAFs based on the RDMA protocol instead of the SBI protocol. Therefore, real-time data or real-time signaling transmitted on a service-based bus is not affected. In addition, data transmission based on the RDMA protocol can further reduce CPU load of the NWDAF, and can satisfy a low-latency and high-throughput requirement for data transmission.

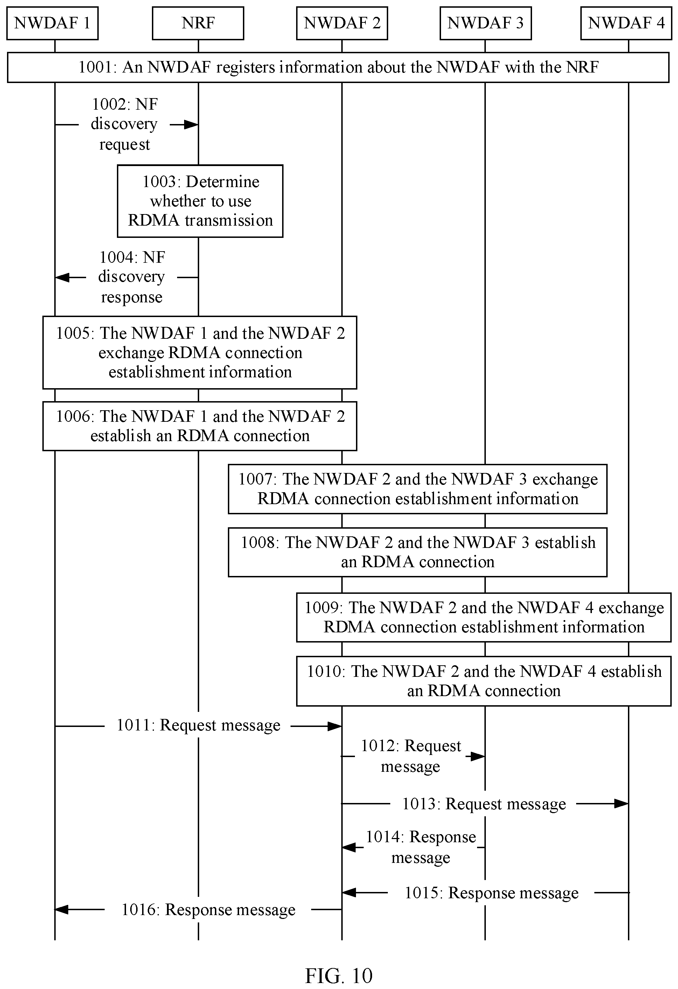

The following embodiment shown in FIG. 10 is a specific example of the case 3.

In any one of the foregoing cases 1 to 3, if an RDMA connection needs to be established between two network elements (for example, the NWDAF and the NF, the NWDAF and the DCCF, the DCCF and the NF, the NWDAF and the MFAF, or the MFAF and the NF), RDMA connection establishment information may be sent to each other based on a preset protocol type, and the RDMA connection is established based on the RDMA connection establishment information. The preset protocol type is an SBI protocol, a socket (Socket) protocol, or a communication manager (communication manager, CM) protocol. The RDMA connection between the NWDAF and the NF is used as an example. The NWDAF sends a connection establishment request to the NF based on the preset protocol type, and the connection establishment request includes RDMA connection establishment information of the NWDAF. The NF sends a connection establishment response to the NWDAF based on the preset protocol type, where the connection establishment response includes RDMA connection establishment information of the NF. Then, the NWDAF and the NF establish the RDMA connection between the NWDAF and the NF based on the RDMA connection establishment information of the NWDAF and the RDMA connection establishment information of the NF.

In the foregoing solution, in a core network, a large amount of data is transmitted based on an RDMA protocol instead of an SBI protocol. Therefore, real-time data or real-time signaling transmitted on a service-based bus is not affected, which improves service quality. In addition, data transmission based on the RDMA protocol can further reduce CPU load of a core network element, and can satisfy a low-latency and high-throughput requirement for data transmission.

FIG. 6(b) is a schematic flowchart of a communication method according to an embodiment of this application. The method is performed by an NF or a module (for example, a chip) of the NF, and an NRF or a module (for example, a chip) of the NRF. The following uses an example in which the NF and the NRF perform the method for description.

The method includes the following steps.

Step 601b: The NF sends a registration request to the NRF. Correspondingly, the NRF receives the registration request.

The registration request includes identification information of the NF, a type of the NF, and RDMA information of the NF.

The RDMA information includes one or more of the following information: whether the NF supports an RDMA protocol, an RDMA protocol type (for example, an IB protocol, an iWARP protocol, a RoCEv1 protocol, a RoCEv2 protocol, or another type of protocol) supported by the NF, or a bearer network type corresponding to the RDMA protocol type supported by the NF. If the NF supports the iWARP protocol, the RoCEv1 protocol, or the RoCEv2 protocol, a bearer network type required by the NF is an Ethernet. If the NF supports the IB protocol, a bearer network type required by the NF is an IB dedicated network.

Optionally, the registration request further includes status information of a CPU of the NF. For meanings of the status information of the CPU, refer to the foregoing descriptions.

Optionally, the registration request further includes at least one of CPU hardware information of the NF, graphics processing unit (graphics processing unit, GPU) hardware information of the NF, or network interface card information of the NF. The network interface card information includes, for example, at least one of a transmission rate supported by a network interface card, an RDMA protocol type supported by a network, or RDMA driver information.

Step 602b: The NRF sends a registration response to the NF. Correspondingly, the NF receives the registration response. The registration response indicates a registration success or a registration failure.

In an implementation method, after step 602b, when the status information of the CPU of the NF changes, the NF may send an update request to the NRF, where the update request includes updated status information of the CPU. For example, if CPU usage of the NF changes, causing a CPU status to update from Good to Normal or Poor, or from Normal to Good, the NF may send the updated status information of the CPU to the NRF.

In the foregoing solution, the NF may register the RDMA information of the NF and the status information of the CPU with the NRF, so that another network element may subsequently obtain the RDMA information of the NF and/or the status information of the CPU from the NRF, thereby helping quickly obtain the RDMA information of the NF and/or the status information of the CPU.

The following describes the embodiments shown in FIG. 6(a) and FIG. 6(b) with reference to the specific examples in FIG. 7 to FIG. 10.

FIG. 7 is a schematic flowchart of a communication method according to an embodiment of this application. This embodiment is applicable to a scenario in which an NWDAF collects data from an NF based on an RDMA protocol. The method includes the following steps.

Step 701: An NF sends a registration request to an NRF. Correspondingly, the NRF receives the registration request.

The registration request includes information about the NF, and the information about the NF includes identification information of the NF, an NF type, RDMA information of the NF, and status information of a CPU of the NF. Optionally, the information about the NF further includes at least one of CPU hardware information of the NF, GPU hardware information of the NF, or network interface card information of the NF. The network interface card information includes, for example, at least one of a transmission rate supported by a network interface card, an RDMA protocol type supported by a network, or RDMA driver information.

The identification information of the NF is for uniquely identifying the NF.

The NF type indicates a type of an NF. For example, the NF type is an SMF, an AMF, an AF, a UPF, or a PCF.

The RDMA information includes one or more of the following information: whether the NF supports an RDMA protocol, an RDMA protocol type (for example, an IB protocol, an iWARP protocol, a RoCEv1 protocol, a RoCEv2 protocol, or another type of protocol) supported by the NF, or a bearer network type corresponding to the RDMA protocol type supported by the NF.

If the NF supports the iWARP protocol, the RoCEv1 protocol, or the RoCEv2 protocol, a bearer network type required by the NF is an Ethernet. If the NF supports the IB protocol, a bearer network type required by the NF is an IB dedicated network.

For example, the registration request may be Nnrf_NfManagement_NfRegister_request.

After receiving the registration request from the NF, the NRF stores the information about the NF on the NRF.

Step 702: The NRF sends a registration response to the NF. Correspondingly, the NF receives the registration response.

The registration response indicates a registration success or a registration failure.

For example, the registration response may be Nnrf_NfManagement_NfRegister_response.

Step 703: The NF sends an update request to the NRF. Correspondingly, the NRF receives the update request.

Step 703 is an optional step.

If a status of the CPU of the NF changes, the NF sends the update request to the NRF, where the update request includes updated status information of the CPU. For example, if CPU usage of the NF changes, causing a CPU status to update from Good to Normal or Poor, or from Normal to Good, the NF may send the updated status information of the CPU to the NRF.

Step 704: An NWDAF sends a request message to the NRF. Correspondingly, the NRF receives the request message.

The request message includes indication information and the identification information (NF ID) of the NF, and the indication information indicates to obtain the RDMA information of the NF.

For example, the request message may be Nnrf_Nfdiscovery_request.

Step 705: The NRF sends a response message to the NWDAF. Correspondingly, the NWDAF receives the response message.

The response message includes the RDMA information, and optionally, the response message further includes the status information of the CPU.

For example, the response message may be Nnrf_Nfdiscovery_response.

Step 706: The NWDAF determines whether to use RDMA transmission.

The NWDAF determines, based on the RDMA information, based on the RDMA information and service information, based on the RDMA information and the status information of the CPU, or based on the RDMA information, the service information, and the status information of the CPU, whether to use RDMA transmission. The service information includes at least one of the following: a service analytics identifier (Analytics ID), a service type (for example, an inference task or a training task), or a task priority. The analytics identifier indicates a to-be-analyzed service. The task priority may be represented by a priority value, or may be represented by specified completion time.

For example, if the NWDAF locally configures that an RDMA transmission mode is used for transmission by default, and the NWDAF determines, based on the RDMA information, that an RDMA connection can be established between the NWDAF and the NF, the NWDAF determines to use RDMA transmission.

For another example, when the NWDAF needs to collect data from the NF, if the NWDAF determines, based on the service information, that a large amount of data needs to be transmitted between the NWDAF and the NF, and determines, based on the RDMA information, that an RDMA connection can be established between the NWDAF and the NF, the NWDAF determines to use RDMA transmission. Subsequently, after the RDMA connection is established between the NWDAF and the NF, a large amount of data is transmitted between the NWDAF and the NF based on the RDMA protocol instead of an SBI protocol. Therefore, real-time data or real-time signaling transmitted on a service-based bus is not affected. In addition, data transmission based on the RDMA protocol can further reduce CPU load of the NWDAF and the NF, and can satisfy a low-latency and high-throughput requirement for data transmission.

For another example, when the NWDAF needs to collect data from the NF, if the NWDAF determines, based on the service information, that data needs to be urgently transmitted between the NWDAF and the NF, and determines, based on the RDMA information, that an RDMA connection can be established between the NWDAF and the NF, the NWDAF determines to use RDMA transmission. Subsequently, after the RDMA connection is established between the NWDAF and the NF, data transmission is performed between the NWDAF and the NF based on the RDMA protocol. Because data transmission based on the RDMA protocol does not pass through the kernel, a data transmission speed is high, and an urgent service requirement can be satisfied. In addition, data transmission based on the RDMA protocol can further reduce CPU load of the NWDAF and the NF, and can satisfy a low-latency and high-throughput requirement for data transmission.

For another example, when the NWDAF needs to collect data from the NF, if the NWDAF determines, based on the status information of the CPU of the NF, that current CPU load of the NF is heavy, and determines, based on the RDMA information, that an RDMA connection can be established between the NWDAF and the NF, the NWDAF determines to use RDMA transmission. Subsequently, after the RDMA connection is established between the NWDAF and the NF, data transmission is performed between the NWDAF and the NF based on the RDMA protocol, so that CPU load of the NWDAF and the NF can be reduced, and a low-latency and high-throughput requirement for data transmission can be met.

For another example, when the NWDAF needs to collect data from the NF, if the NWDAF determines, based on the service information, that a small amount of data needs to be transmitted between the NWDAF and the NF, but determines, based on the status information of the CPU of the NF, that current CPU load of the NF is heavy, and determines, based on the RDMA information, that an RDMA connection can be established between the NWDAF and the NF, the NWDAF determines to use RDMA transmission. Subsequently, after the RDMA connection is established between the NWDAF and the NF, data transmission is performed between the NWDAF and the NF based on the RDMA protocol, so that CPU load of the NWDAF and the NF can be reduced, and a low-latency and high-throughput requirement for data transmission can be met.

For another example, when the NWDAF needs to collect data from the NF, if the NWDAF determines, based on the status information of the CPU of the NF, that current CPU load of the NF is light, but determines, based on the service information, that a large amount of data needs to be transmitted between the NWDAF and the NF, and determines, based on the RDMA information, that an RDMA connection can be established between the NWDAF and the NF, the NWDAF determines to use RDMA transmission. Subsequently, after the RDMA connection is established between the NWDAF and the NF, a large amount of data is transmitted between the NWDAF and the NF based on the RDMA protocol instead of an SBI protocol. Therefore, real-time data or real-time signaling transmitted on a service-based bus is not affected. In addition, data transmission based on the RDMA protocol can further reduce CPU load of the NWDAF and the NF, and can satisfy a low-latency and high-throughput requirement for data transmission.

If it is determined to use RDMA transmission in step 706, the following step 707 to step 711 are performed after step 706.

Step 707: The NWDAF selects an RDMA protocol.

Step 707 is an optional step.

If the NF supports a plurality of RDMA protocols, for example, supports both an iWARP protocol and a RoCEv1, the NWDAF selects one RDMA protocol from the plurality of supported RDMA protocols. For example, the NWDAF may select, based on the service information, an appropriate RDMA protocol for data transmission. A manner of selecting the RDMA protocol is not limited in this application.

Step 708: The NWDAF and the NF exchange RDMA connection establishment information.

For example, the NWDAF sends a connection establishment request to the NF, where the connection establishment request includes RDMA connection establishment information of the NWDAF, and then the NF sends a connection establishment response to the NWDAF, where the connection establishment response includes RDMA connection establishment information of the NF. The connection establishment request and the connection establishment response may be transmitted based on an SBI protocol, a socket protocol, or a communication manager protocol. This is not limited in this application.

The RDMA connection establishment information of the NWDAF includes a port identifier and a queue pair identifier of the NWDAF. Optionally, the RDMA connection establishment information of the NWDAF further includes one or more of access permission information, a source host address, a destination host address, a connection type, a service level, a protocol type, an operation mode, or a virtual memory address. For example, the port identifier of the NWDAF includes a local identifier (local ID, LID), or includes a local identifier and a global identifier (global ID, GID). For example, the queue pair identifier may be a queue pair number (queue pair number, QPN). The port identifier and the queue pair identifier of the NWDAF may jointly indicate a QP address. Specifically, a port is indicated by using the port identifier, and a QP in the port is indicated by using the queue pair identifier. The source host address is an IP address of the NWDAF. The destination host address is an IP address of the NF. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

The RDMA connection establishment information of the NF includes a port identifier and a queue pair identifier of the NF. Optionally, the RDMA connection establishment information of the NF further includes one or more of access permission information, a source host address, a destination host address, a connection type, a service level, a protocol type, an operation mode, or a virtual memory address. For example, the port identifier of the NF includes a local identifier, or includes a local identifier and a global identifier. For example, the queue pair identifier may be a QPN. The port identifier and the queue pair identifier of the NF may jointly indicate a QP address. Specifically, a port is indicated by using the port identifier, and a QP in the port is indicated by using the queue pair identifier. The source host address is an IP address of the NF. The destination host address is an IP address of the NWDAF. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

Step 709: The NWDAF and the NF establish an RDMA connection.

For a specific implementation process of establishing the RDMA connection between the NWDAF and the NF, refer to an implementation process of establishing an RDMA connection between two nodes in a conventional technology. Details are not described.

Step 710: The NWDAF sends a subscription request to the NF. Correspondingly, the NF receives the subscription request.

The subscription request is sent based on the RDMA protocol.

The subscription request is for subscribing to data from the NF, where the data is data that needs to be collected by the NWDAF.

For example, the subscription request is Nnf_EventExposure_Subscribe.

Step 711: The NF sends a notification message to the NWDAF. Correspondingly, the NWDAF receives the notification message.

The notification message is sent based on the RDMA protocol.

The notification message includes data subscribed to by the NWDAF.

For example, the notification message is Nnf_EventExposure_Notify.

In the foregoing solution, the RDMA connection is established between the NWDAF and the NF, so that data transmission is performed between the NWDAF and the NF based on the RDMA protocol. On one hand, transmission of a large amount of data based on the SBI protocol is avoided, and therefore, real-time data or real-time signaling transmitted on a service-based bus is not affected. On the other hand, data transmission based on the RDMA protocol can reduce CPU load of the NWDAF and the NF, and can satisfy a low-latency and high-throughput requirement for data transmission.

FIG. 8 is a schematic flowchart of a communication method according to an embodiment of this application. This embodiment is applicable to a scenario in which a DCCF collects data from an NF based on an RDMA protocol. The method includes the following steps.

Step 801 to step 803 are the same as step 701 to step 703 in the embodiment in FIG. 7.

Step 803 is an optional step.

Step 804: An NWDAF sends a subscription request to the DCCF. Correspondingly, the DCCF receives the subscription request.

The subscription request is for subscribing to data from the DCCF.

For example, the subscription request is Ndccf_DataManagement_subscribe.

Step 805: The DCCF sends a subscription request to the NF. Correspondingly, the NF receives the subscription request.

The subscription request is for requesting a load value of a CPU of the NF.

Step 806: The NF sends a notification message to the DCCF. Correspondingly, the DCCF receives the notification message.

The notification message includes the load value of the CPU of the NF. For example, the load value of the CPU is 50% or 60%.

The NF may periodically report a latest load value of the CPU to the DCCF, or may report a latest load value of the CPU to the DCCF when a change amount of the load value of the CPU exceeds a threshold.

Step 805 and step 806 are optional steps.

Step 807: The DCCF sends a request message to the NRF. Correspondingly, the NRF receives the request message.

The request message includes indication information and the identification information (NF ID) of the NF, and the indication information indicates to obtain RDMA information of the NF.

For example, the request message may be Nnrf_Nfdiscovery_request.

Step 808: The NRF sends a response message to the DCCF. Correspondingly, the DCCF receives the response message.

The response message includes the RDMA information, and optionally, the response message further includes the status information of the CPU.

For example, the response message may be Nnrf_Nfdiscovery_response.

Step 809: The DCCF determines whether to use RDMA transmission.

The DCCF determines, based on the RDMA information, based on the RDMA information and the service information, based on the RDMA information and the status information of the CPU (or the load value of the CPU), or based on the RDMA information, the service information, and the status information of the CPU (or the load value of the CPU), whether to use RDMA transmission. The service information includes at least one of the following: a service analytics identifier (Analytics ID), a service type (for example, an inference task or a training task), or a task priority. The analytics identifier indicates a to-be-analyzed service. The task priority may be represented by a priority value, or may be represented by specified completion time.

For example, if the DCCF locally configures that an RDMA transmission mode is used for transmission by default, and the DCCF determines, based on the RDMA information, that an RDMA connection can be established between the NWDAF and the NF, the DCCF determines to use RDMA transmission.

For another example, when the DCCF needs to collect data from the NF, if the DCCF determines, based on the service information, that a large amount of data needs to be transmitted between the DCCF and the NF, and determines, based on the RDMA information, that an RDMA connection can be established between the DCCF and the NF, the DCCF determines to use RDMA transmission. Subsequently, after the RDMA connection is established between the DCCF and the NF and an RDMA connection is established between the DCCF and an NWDAF, a large amount of data is transmitted between the DCCF and the NF and between the DCCF and the NWDAF based on the RDMA protocol instead of an SBI protocol. Therefore, real-time data or real-time signaling transmitted on a service-based bus is not affected. In addition, data transmission based on the RDMA protocol can further reduce CPU load of the DCCF, the NWDAF, and the NF, and can satisfy a low-latency and high-throughput requirement for data transmission.

For another example, when the DCCF needs to collect data from the NF, if the DCCF determines, based on the service information, that data needs to be urgently transmitted between the DCCF and the NF, and determines, based on the RDMA information, that an RDMA connection can be established between the DCCF and the NF, the DCCF determines to use RDMA transmission. Subsequently, after the RDMA connection is established between the DCCF and the NF and an RDMA connection is established between the DCCF and an NWDAF, data is transmitted between the DCCF and the NF and between the DCCF and the NWDAF based on the RDMA protocol. Because data transmission based on the RDMA protocol does not pass through the kernel, a data transmission speed is high, and an urgent service requirement can be satisfied. In addition, data transmission based on the RDMA protocol can further reduce CPU load of the DCCF, the NWDAF, and the NF, and can satisfy a low-latency and high-throughput requirement for data transmission.

For another example, when the DCCF needs to collect data from the NF, if the DCCF determines, based on the status information of the CPU (or the load value of the CPU) of the NF, that current CPU load of the NF is heavy, and determines, based on the RDMA information, that an RDMA connection can be established between the DCCF and the NF, the DCCF determines to use RDMA transmission. Subsequently, after the RDMA connection is established between the DCCF and the NF and an RDMA connection is established between the DCCF and an NWDAF, data is transmitted between the DCCF and the NF and between the DCCF and the NWDAF based on the RDMA protocol, so that CPU load of the DCCF, the NWDAF, and the NF can be reduced, and a low-latency and high-throughput requirement for data transmission can be met.

For another example, when the DCCF needs to collect data from the NF, if the DCCF determines, based on the service information, that a small amount of data needs to be transmitted between the DCCF and the NF, but determines, based on the status information of the CPU (or the load value of the CPU) of the NF, that current CPU load of the NF is heavy, and determines, based on the RDMA information, that an RDMA connection can be established between the DCCF and the NF, the DCCF determines to use RDMA transmission. Subsequently, after the RDMA connection is established between the DCCF and the NF and an RDMA connection is established between the DCCF and an NWDAF, data is transmitted between the DCCF and the NF and between the DCCF and the NWDAF based on the RDMA protocol, so that CPU load of the DCCF, the NWDAF, and the NF can be reduced, and a low-latency and high-throughput requirement for data transmission can be met.

For another example, when the DCCF needs to collect data from the NF, if the DCCF determines, based on the status information of the CPU (or the load value of the CPU) of the NF, that current CPU load of the NF is light, but determines, based on the service information, that a large amount of data needs to be transmitted between the DCCF and the NF, and determines, based on the RDMA information, that an RDMA connection can be established between the DCCF and the NF, the DCCF determines to use RDMA transmission. Subsequently, after the RDMA connection is established between the DCCF and the NF and an RDMA connection is established between the DCCF and an NWDAF, a large amount of data is transmitted between the DCCF and the NF and between the DCCF and the NWDAF based on the RDMA protocol instead of an SBI protocol. Therefore, real-time data or real-time signaling transmitted on a service-based bus is not affected. In addition, data transmission based on the RDMA protocol can further reduce CPU load of the DCCF, the NWDAF, and the NF, and can satisfy a low-latency and high-throughput requirement for data transmission.

Step 810: The DCCF selects an RDMA protocol.

Step 810 is an optional step.

If the NF supports a plurality of RDMA protocols, for example, supports both an iWARP protocol and a RoCEv1, the DCCF selects one RDMA protocol from the plurality of supported RDMA protocols. For example, the DCCF may select, based on the service information, an appropriate RDMA protocol for data transmission. A manner of selecting the RDMA protocol is not limited in this application.

Step 811: The DCCF and the NWDAF exchange RDMA connection establishment information.

For example, the DCCF sends a connection establishment request to the NWDAF, where the connection establishment request includes RDMA connection establishment information of the DCCF, and then the NWDAF sends a connection establishment response to the DCCF, where the connection establishment response includes RDMA connection establishment information of the NWDAF. The connection establishment request and the connection establishment response may be transmitted based on an SBI protocol, a socket protocol, or a communication manager protocol. This is not limited in this application.

The RDMA connection establishment information of the DCCF includes a port identifier and a queue pair identifier of the DCCF. Optionally, the RDMA connection establishment information of the DCCF further includes one or more of access permission information, a source host address, a destination host address, a connection type, a service level, a protocol type, an operation mode, or a virtual memory address. For example, the port identifier of the DCCF includes a local identifier, or includes a local identifier and a global identifier. For example, the queue pair identifier may be a QPN. The port identifier and the queue pair identifier of the DCCF may jointly indicate a QP address. Specifically, a port is indicated by using the port identifier, and a QP in the port is indicated by using the queue pair identifier. The source host address is an IP address of the DCCF. The destination host address is an IP address of the NWDAF. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

The RDMA connection establishment information of the NWDAF includes a port identifier and a queue pair identifier of the NWDAF. Optionally, the RDMA connection establishment information of the NWDAF further includes one or more of access permission information, a source host address, a destination host address, a connection type, a service level, a protocol type, an operation mode, or a virtual memory address. For example, the port identifier of the NWDAF includes a local identifier, or includes a local identifier and a global identifier. For example, the queue pair identifier may be a QPN. The port identifier and the queue pair identifier of the NWDAF may jointly indicate a QP address. Specifically, a port is indicated by using the port identifier, and a QP in the port is indicated by using the queue pair identifier. The source host address is an IP address of the NWDAF. The destination host address is an IP address of the DCCF. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

Step 812: The DCCF and the NWDAF establish an RDMA connection.

For a specific implementation process of establishing the RDMA connection between the DCCF and the NWDAF, refer to an implementation process of establishing an RDMA connection between two nodes in a conventional technology. Details are not described.

Step 813: The DCCF and the NF exchange RDMA connection establishment information.

For example, the DCCF sends a connection establishment request to the NF, where the connection establishment request includes RDMA connection establishment information of the DCCF, and then the NF sends a connection establishment response to the DCCF, where the connection establishment response includes RDMA connection establishment information of the NF. The connection establishment request and the connection establishment response may be transmitted based on an SBI protocol, a socket protocol, or a communication manager protocol. This is not limited in this application.

The RDMA connection establishment information of the DCCF includes a port identifier and a queue pair identifier of the DCCF. Optionally, the RDMA connection establishment information of the DCCF further includes one or more of access permission information, a source host address, a destination host address, a connection type, a service level, a protocol type, an operation mode, or a virtual memory address. For example, the port identifier of the DCCF includes a local identifier, or includes a local identifier and a global identifier. For example, the queue pair identifier may be a QPN. The port identifier and the queue pair identifier of the DCCF may jointly indicate a QP address. Specifically, a port is indicated by using the port identifier, and a QP in the port is indicated by using the queue pair identifier. The source host address is an IP address of the DCCF. The destination host address is an IP address of the NF. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

The RDMA connection establishment information of the NF includes a port identifier and a queue pair identifier of the NF. Optionally, the RDMA connection establishment information of the NF further includes one or more of access permission information, a source host address, a destination host address, a connection type, a service level, a protocol type, an operation mode, or a virtual memory address. For example, the port identifier of the NF includes a local identifier, or includes a local identifier and a global identifier. For example, the queue pair identifier may be a QPN. The port identifier and the queue pair identifier of the NF may jointly indicate a QP address. Specifically, a port is indicated by using the port identifier, and a QP in the port is indicated by using the queue pair identifier. The source host address is an IP address of the NF. The destination host address is an IP address of the DCCF. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

Step 814: The DCCF and the NF establish an RDMA connection.

For a specific implementation process of establishing the RDMA connection between the DCCF and the NF, refer to an implementation process of establishing an RDMA connection between two nodes in a conventional technology. Details are not described.

Step 815: The DCCF sends a subscription request to the NF. Correspondingly, the NF receives the subscription request.

The subscription request is sent based on the RDMA protocol.

The subscription request is for subscribing to data from the NF, where the data is data that needs to be collected by the DCCF.

For example, the subscription request is Nnf_EventExposure_Subscribe.

Step 816: The NF sends a notification message to the DCCF. Correspondingly, the DCCF receives the notification message.

The notification message is sent based on the RDMA protocol.

The notification message includes data subscribed to by the DCCF.

For example, the notification message is Nnf_EventExposure_Notify.

Step 817: The DCCF sends a notification message to the NWDAF. Correspondingly, the NWDAF receives the notification message.

The notification message is sent based on the RDMA protocol.

The notification message includes data subscribed to by the NWDAF.

For example, the notification message is Ndccf_DataManagement_Notify.

Step 818: An NWDAF sends a request message to the DCCF. Correspondingly, the DCCF receives the request message.

The request message is sent based on the RDMA protocol.

The request message is for requesting collected data from the DCCF.

For example, the request message is Ndccf_DataManagement_FetchRequest.

Step 819: The DCCF sends a response message to the NWDAF. Correspondingly, the NWDAF receives the response message.

The response message is sent based on the RDMA protocol.

The response message includes data collected by the DCCF.

For example, the response message is Ndccf_DataManagement_FetchResponse.

Step 818 and step 819 are optional steps.

In the foregoing solution, the RDMA connection is established between the DCCF and the NF and between the DCCF and the NWDAF, so that data transmission is performed between the DCCF and the NF and between the DCCF and the NWDAF based on the RDMA protocol. On one hand, transmission of a large amount of data based on the SBI protocol is avoided, and therefore, real-time data or real-time signaling transmitted on a service-based bus is not affected. On the other hand, data transmission based on the RDMA protocol can reduce CPU load of the DCCF, the NWDAF, and the NF, and can satisfy a low-latency and high-throughput requirement for data transmission.

FIG. 9 is a schematic flowchart of a communication method according to an embodiment of this application. The method includes the following steps.

Step 901 to step 908 are the same as step 801 to step 808 in the embodiment in FIG. 8.

Step 903, step 905, and step 906 are all optional steps.

Step 909: The DCCF determines whether to use RDMA transmission.

The DCCF determines, based on the RDMA information, based on the RDMA information and the service information, based on the RDMA information and the status information of the CPU (or the load value of the CPU), or based on the RDMA information, the service information, and the status information of the CPU (or the load value of the CPU), whether to use RDMA transmission. The service information includes at least one of the following: a service analytics identifier (Analytics ID), a service type (for example, an inference task or a training task), or a task priority. The analytics identifier indicates a to-be-analyzed service. The task priority may be represented by a priority value, or may be represented by specified completion time.

For example, if the DCCF locally configures that an RDMA transmission mode is used for transmission by default, and the DCCF determines, based on the RDMA information, that an RDMA connection can be established between an MFAF and the NF and between the NWDAF and the MFAF, the DCCF determines to use RDMA transmission.

For another example, when the NWDAF needs to collect data from the NF, if the DCCF determines, based on the service information, that a large amount of data needs to be transmitted between the NWDAF and the NF, and determines, based on the RDMA information, that an RDMA connection can be established between an MFAF and the NF and between the NWDAF and the MFAF, the DCCF determines to use RDMA transmission. Subsequently, after the RDMA connection is established between the MFAF and the NF and an RDMA connection is established between the MFAF and the NWDAF, a large amount of data is transmitted between the MFAF and the NF and between the MFAF and the NWDAF based on the RDMA protocol instead of an SBI protocol. Therefore, real-time data or real-time signaling transmitted on a service-based bus is not affected. In addition, data transmission based on the RDMA protocol can further reduce CPU load of the MFAF, the NWDAF, and the NF, and can satisfy a low-latency and high-throughput requirement for data transmission.

For another example, when the NWDAF needs to collect data from the NF, if the DCCF determines, based on the service information, that data needs to be urgently transmitted between the NWDAF and the NF, and determines, based on the RDMA information, that an RDMA connection can be established between an MFAF and the NF and between the NWDAF and the MFAF, the DCCF determines to use RDMA transmission. Subsequently, after the RDMA connection is established between the MFAF and the NF and an RDMA connection is established between the MFAF and the NWDAF, data is transmitted between the MFAF and the NF and between the MFAF and the NWDAF based on the RDMA protocol. Because data transmission based on the RDMA protocol does not pass through the kernel, a data transmission speed is high, and an urgent service requirement can be satisfied. In addition, data transmission based on the RDMA protocol can further reduce CPU load of the MFAF, the NWDAF, and the NF, and can satisfy a low-latency and high-throughput requirement for data transmission.

For another example, when the NWDAF needs to collect data from the NF, if the DCCF determines, based on the status information of the CPU (or the load value of the CPU) of the NF, that current CPU load of the NF is heavy, and determines, based on the RDMA information, that an RDMA connection can be established between an MFAF and the NF and between the NWDAF and the MFAF, the DCCF determines to use RDMA transmission. Subsequently, after the RDMA connection is established between the MFAF and the NF and an RDMA connection is established between the MFAF and an NWDAF, data is transmitted between the MFAF and the NF and between the MFAF and the NWDAF based on the RDMA protocol, so that CPU load of the MFAF, the NWDAF, and the NF can be reduced, and a low-latency and high-throughput requirement for data transmission can be met.

For another example, when the NWDAF needs to collect data from the NF, if the DCCF determines, based on the service information, that a small amount of data needs to be transmitted between the NWDAF and the NF, but determines, based on the status information of the CPU (or the load value of the CPU) of the NF, that current CPU load of the NF is heavy, and determines, based on the RDMA information, that an RDMA connection can be established between an MFAF and the NF and between the NWDAF and the MFAF, the DCCF determines to use RDMA transmission. Subsequently, after the RDMA connection is established between the MFAF and the NF and an RDMA connection is established between the MFAF and an NWDAF, data is transmitted between the MFAF and the NF and between the MFAF and the NWDAF based on the RDMA protocol, so that CPU load of the MFAF, the NWDAF, and the NF can be reduced, and a low-latency and high-throughput requirement for data transmission can be met.

For another example, when the NWDAF needs to collect data from the NF, if the DCCF determines, based on the status information of the CPU (or the load value of the CPU) of the NF, that current CPU load of the NF is light, but determines, based on the service information, that a large amount of data needs to be transmitted between the NWDAF and the NF, and determines, based on the RDMA information, that an RDMA connection can be established between an MFAF and the NF and between the NWDAF and the MFAF, the DCCF determines to use RDMA transmission. Subsequently, after the RDMA connection is established between the MFAF and the NF and an RDMA connection is established between the MFAF and an NWDAF, a large amount of data is transmitted between the MFAF and the NF and between the MFAF and the NWDAF based on the RDMA protocol instead of an SBI protocol. Therefore, real-time data or real-time signaling transmitted on a service-based bus is not affected. In addition, data transmission based on the RDMA protocol can further reduce CPU load of the MFAF, the NWDAF, and the NF, and can satisfy a low-latency and high-throughput requirement for data transmission.

Step 910: The DCCF selects an RDMA protocol.

Step 910 is an optional step.

If the NF supports a plurality of RDMA protocols, for example, supports both an iWARP protocol and a RoCEv1, the DCCF selects one RDMA protocol from the plurality of supported RDMA protocols. For example, the DCCF may select, based on the service information, an appropriate RDMA protocol for data transmission. A manner of selecting the RDMA protocol is not limited in this application.

Step 911: The MFAF and the NWDAF exchange RDMA connection establishment information.

For example, the DCCF sends indication information to the NWDAF, where the indication information indicates the NWDAF to initiate establishment of the RDMA connection to the MFAF. In this case, the NWDAF sends a connection establishment request to the MFAF, where the connection establishment request includes RDMA connection establishment information of the NWDAF, and then the MFAF sends a connection establishment response to the NWDAF, where the connection establishment response includes RDMA connection establishment information of the MFAF. The connection establishment request and the connection establishment response may be transmitted based on an SBI protocol, a socket protocol, or a communication manager protocol. This is not limited in this application.

For another example, the DCCF sends indication information to the MFAF, where the indication information indicates the MFAF to initiate establishment of the RDMA connection to the NWDAF. In this case, the MFAF sends a connection establishment request to the NWDAF, where the connection establishment request includes RDMA connection establishment information of the MFAF, and then the NWDAF sends a connection establishment response to the MFAF, where the connection establishment response includes RDMA connection establishment information of the NWDAF. The connection establishment request and the connection establishment response may be transmitted based on an SBI protocol, a socket protocol, or a communication manager protocol. This is not limited in this application.

The RDMA connection establishment information of the MFAF includes a port identifier and a queue pair identifier of the MFAF. Optionally, the RDMA connection establishment information of the MFAF further includes one or more of access permission information, a source host address, a destination host address, a connection type, a service level, a protocol type, an operation mode, or a virtual memory address. For example, the port identifier of the MFAF includes a local identifier, or includes a local identifier and a global identifier. For example, the queue pair identifier may be a QPN. The port identifier and the queue pair identifier of the MFAF may jointly indicate a QP address. Specifically, a port is indicated by using the port identifier, and a QP in the port is indicated by using the queue pair identifier. The source host address is an IP address of the MFAF. The destination host address is an IP address of the NWDAF. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

The RDMA connection establishment information of the NWDAF includes a port identifier and a queue pair identifier of the NWDAF. Optionally, the RDMA connection establishment information of the NWDAF further includes one or more of access permission information, a source host address, a destination host address, a connection type, a service level, a protocol type, an operation mode, or a virtual memory address. For example, the port identifier of the NWDAF includes a local identifier, or includes a local identifier and a global identifier. For example, the queue pair identifier may be a QPN. The port identifier and the queue pair identifier of the NWDAF may jointly indicate a QP address. Specifically, a port is indicated by using the port identifier, and a QP in the port is indicated by using the queue pair identifier. The source host address is an IP address of the NWDAF. The destination host address is an IP address of the MFAF. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

Step 912: The MFAF and the NWDAF establish an RDMA connection.

For a specific implementation process of establishing the RDMA connection between the MFAF and the NWDAF, refer to an implementation process of establishing an RDMA connection between two nodes in a conventional technology. Details are not described.

Step 913: The MFAF and the NF exchange RDMA connection establishment information.

For example, the DCCF sends indication information to the NF, where the indication information indicates the NF to initiate establishment of the RDMA connection to the MFAF. In this case, the NF sends a connection establishment request to the MFAF, where the connection establishment request includes RDMA connection establishment information of the NF, and then the MFAF sends a connection establishment response to the NF, where the connection establishment response includes RDMA connection establishment information of the MFAF. The connection establishment request and the connection establishment response may be transmitted based on an SBI protocol, a socket protocol, or a communication manager protocol. This is not limited in this application.

For another example, the DCCF sends indication information to the MFAF, where the indication information indicates the MFAF to initiate establishment of the RDMA connection to the NF. In this case, the MFAF sends a connection establishment request to the NF, where the connection establishment request includes RDMA connection establishment information of the MFAF, and then the NF sends a connection establishment response to the MFAF, where the connection establishment response includes RDMA connection establishment information of the NF. The connection establishment request and the connection establishment response may be transmitted based on an SBI protocol, a socket protocol, or a communication manager protocol. This is not limited in this application.

The RDMA connection establishment information of the MFAF includes a port identifier and a queue pair identifier of the MFAF. Optionally, the RDMA connection establishment information of the MFAF further includes one or more of access permission information, a source host address, a destination host address, a connection type, a service level, a protocol type, an operation mode, or a virtual memory address. For example, the port identifier of the MFAF includes a local identifier, or includes a local identifier and a global identifier. For example, the queue pair identifier may be a QPN. The port identifier and the queue pair identifier of the MFAF may jointly indicate a QP address. Specifically, a port is indicated by using the port identifier, and a QP in the port is indicated by using the queue pair identifier. The source host address is an IP address of the MFAF. The destination host address is an IP address of the NF. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

The RDMA connection establishment information of the NF includes a port identifier and a queue pair identifier of the NF. Optionally, the RDMA connection establishment information of the NF further includes one or more of access permission information, a source host address, a destination host address, a connection type, a service level, a protocol type, an operation mode, or a virtual memory address. For example, the port identifier of the NF includes a local identifier, or includes a local identifier and a global identifier. For example, the queue pair identifier may be a QPN. The port identifier and the queue pair identifier of the NF may jointly indicate a QP address. Specifically, a port is indicated by using the port identifier, and a QP in the port is indicated by using the queue pair identifier. The source host address is an IP address of the NF. The destination host address is an IP address of the MFAF. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

Step 914: The MFAF and the NF establish an RDMA connection.

For a specific implementation process of establishing the RDMA connection between the MFAF and the NF, refer to an implementation process of establishing an RDMA connection between two nodes in a conventional technology. Details are not described.

Step 915: The DCCF sends a subscription request to the NF. Correspondingly, the NF receives the subscription request.

The subscription request is sent based on the RDMA protocol.

The subscription request is for subscribing to data from the NF, where the data is data that needs to be collected by the DCCF.

For example, the subscription request is Nnf_EventExposure_Subscribe.

Step 916: The NF sends a notification message to the MFAF. Correspondingly, the MFAF receives the notification message.

The notification message is sent based on the RDMA protocol.

The notification message includes data subscribed to by the DCCF.

For example, the notification message is Nnf_EventExposure_Notify.

Step 917: The MFAF sends a notification message to the NWDAF. Correspondingly, the NWDAF receives the notification message.

The notification message is sent based on the RDMA protocol.

The notification message includes data subscribed to by the NWDAF.

For example, the notification message is Nmfaf_3caDataManagement_Notify.

Step 918: An NWDAF sends a request message to the MFAF. Correspondingly, the MFAF receives the request message.

The request message is sent based on the RDMA protocol.

The request message is for requesting collected data from the MFAF.

For example, the request message is Nmfaf_3caDataManagement_FetchRequest.

Step 919: The MFAF sends a response message to the NWDAF. Correspondingly, the NWDAF receives the response message.

The response message is sent based on the RDMA protocol.

The response message includes data collected by the MFAF.

For example, the response message is Nmfaf_3caDataManagement_FetchResponse.

Step 918 and step 919 are optional steps.

In the foregoing solution, the RDMA connection is established between the MFAF and the NF and between the MFAF and the NWDAF, so that data transmission is performed between the MFAF and the NF and between the MFAF and the NWDAF based on the RDMA protocol. On one hand, transmission of a large amount of data based on the SBI protocol is avoided, and therefore, real-time data or real-time signaling transmitted on a service-based bus is not affected. On the other hand, data transmission based on the RDMA protocol can reduce CPU load of the MFAF, the NWDAF, and the NF, and can satisfy a low-latency and high-throughput requirement for data transmission.

FIG. 10 is a schematic flowchart of a communication method according to an embodiment of this application. The method includes the following steps.

Step 1001: An NWDAF registers information about the NWDAF with an NRF.

The information about the NWDAF includes identification information of the NWDAF, an NWDAF type, RDMA information of the NWDAF, and status information of a CPU of the NWDAF. Optionally, the information about the NWDAF further includes at least one of CPU hardware information of the NWDAF, GPU hardware information of the NWDAF, or network interface card information of the NWDAF. The network interface card information includes, for example, at least one of a transmission rate supported by a network interface card, an RDMA protocol type supported by a network, or RDMA driver information.

The NWDAF herein includes an NWDAF 1 to an NWDAF 4, and optionally further includes another NWDAF.

For a specific implementation process of step 1001, refer to descriptions of step 701 to step 703 in the embodiment in FIG. 7.

Step 1002: The NWDAF 1 sends an NF discovery request to the NRF. Correspondingly, the NRF receives the NF discovery request.

The NF discovery request is for requesting to discover an NWDAF.

For example, the NF discovery request may be Nnrf_Nfdiscovery_Request.

Optionally, the NF discovery request includes indication information, and the indication information indicates to discover an NWDAF that supports RDMA transmission.

Step 1003: The NRF determines whether to use RDMA transmission.

Step 1003 is an optional step. If the NF discovery request in step 1002 includes the indication information indicating to discover the NWDAF that supports RDMA transmission, the NRF does not need to perform step 1003, but directly performs the following step 1004.

If the NF discovery request in step 1002 does not include the indication information indicating to discover the NWDAF that supports RDMA transmission, step 1003 is performed, and the following step 1004 is performed when the NRF determines to use RDMA transmission.

In an implementation method, the NRF may determine, based on RDMA information of the NWDAF 1, based on the RDMA information of the NWDAF 1 and service information, based on the RDMA information of the NWDAF 1 and CPU status information of the NWDAF 1, or based on the RDMA information of the NWDAF 1, the service information, and the CPU status information of the NWDAF 1, whether to use RDMA transmission. The service information includes at least one of the following: a service analytics identifier (Analytics ID), a service type (for example, an inference task or a training task), or a task priority. The analytics identifier indicates a to-be-analyzed service. The task priority may be represented by a priority value, or may be represented by specified completion time. For a detailed process of determining whether to use RDMA transmission, refer to the descriptions of corresponding steps in the embodiment in FIG. 7, FIG. 8, or FIG. 9. Details are not described again.

Step 1004: The NRF sends an NF discovery response to the NWDAF 1. Correspondingly, the NWDAF 1 receives the NF discovery response.

The NF discovery response includes a list of NWDAFs that support RDMA transmission, and the list of NWDAFs includes identification information of one or more NWDAFs that support RDMA transmission. The following uses an example in which the list of NWDAFs includes identification information of the NWDAF 2, identification information of the NWDAF 3, and identification information of the NWDAF 4 for description. In addition, the NF discovery response further indicates that the NWDAF 2 is an aggregator NWDAF (Aggregator NWDAF), that is, the NWDAF 2 may aggregate data collected by the NWDAF 3 and the NWDAF 4.

For example, the NF discovery response may be Nnrf_Nfdiscovery_Response.

Step 1005: The NWDAF 1 and the NWDAF 2 exchange RDMA connection establishment information.

For example, the NWDAF 1 sends a connection establishment request to the NWDAF 2, where the connection establishment request includes RDMA connection establishment information of the NWDAF 1. Then, the NWDAF 2 sends a connection establishment response to the NWDAF 1, where the connection establishment response includes RDMA connection establishment information of the NWDAF 2. The connection establishment request and the connection establishment response may be transmitted based on an SBI protocol, a socket protocol, or a communication manager protocol. This is not limited in this application.

The RDMA connection establishment information of the NWDAF 1 includes a port identifier and a queue pair identifier of the NWDAF 1. Optionally, the RDMA connection establishment information of the NWDAF 1 further includes one or more of access permission information, a source host address, a destination host address, a connection type, a service level, a protocol type, an operation mode, or a virtual memory address. For example, the port identifier of the NWDAF 1 includes a local identifier, or includes a local identifier and a global identifier. For example, the queue pair identifier may be a QPN. The port identifier and the queue pair identifier of the NWDAF 1 may jointly indicate a QP address. Specifically, a port is indicated by using the port identifier, and a QP in the port is indicated by using the queue pair identifier. The source host address is an IP address of the NWDAF 1. The destination host address is an IP address of the NWDAF 2. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

The RDMA connection establishment information of the NWDAF 2 includes a port identifier and a queue pair identifier of the NWDAF 2. Optionally, the RDMA connection establishment information of the NWDAF 2 further includes one or more of access permission information, a source host address, a destination host address, a connection type, a service level, a protocol type, an operation mode, or a virtual memory address. For example, the port identifier of the NWDAF 2 includes a local identifier, or includes a local identifier and a global identifier. For example, the queue pair identifier may be a QPN. The port identifier and the queue pair identifier of the NWDAF 2 may jointly indicate a QP address. Specifically, a port is indicated by using the port identifier, and a QP in the port is indicated by using the queue pair identifier. The source host address is an IP address of the NWDAF 2. The destination host address is an IP address of the NWDAF 1. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

Step 1006: The NWDAF 1 and the NWDAF 2 establish an RDMA connection.

For a specific implementation process of establishing the RDMA connection between the NWDAF 1 and the NWDAF 2, refer to an implementation process of establishing an RDMA connection between two nodes in a conventional technology. Details are not described.

Step 1007: The NWDAF 2 and the NWDAF 3 exchange RDMA connection establishment information.

For example, if the NWDAF 1 sends indication information to the NWDAF 2, where the indication information indicates the NWDAF 2 to initiate establishment of the RDMA connection to the NWDAF 3. In this case, the NWDAF 2 sends a connection establishment request to the NWDAF 3, where the connection establishment request includes RDMA connection establishment information of the NWDAF 2, and then the NWDAF 3 sends a connection establishment response to the NWDAF 2, where the connection establishment response includes RDMA connection establishment information of the NWDAF 3. The connection establishment request and the connection establishment response may be transmitted based on an SBI protocol, a socket protocol, or a communication manager protocol. This is not limited in this application.

For another example, the NWDAF 1 sends indication information to the NWDAF 3, where the indication information indicates the NWDAF 3 to initiate establishment of the RDMA connection to the NWDAF 2. In this case, the NWDAF 3 sends a connection establishment request to the NWDAF 2, where the connection establishment request includes RDMA connection establishment information of the NWDAF 3, and then the NWDAF 2 sends a connection establishment response to the NWDAF 3, where the connection establishment response includes RDMA connection establishment information of the NWDAF 2. The connection establishment request and the connection establishment response may be transmitted based on an SBI protocol, a socket protocol, or a communication manager protocol. This is not limited in this application.

The RDMA connection establishment information of the NWDAF 2 includes a port identifier and a queue pair identifier of the NWDAF 2. Optionally, the RDMA connection establishment information of the NWDAF 2 further includes one or more of access permission information, a source host address, a destination host address, a connection type, a service level, a protocol type, an operation mode, or a virtual memory address. For example, the port identifier of the NWDAF 2 includes a local identifier, or includes a local identifier and a global identifier. For example, the queue pair identifier may be a QPN. The port identifier and the queue pair identifier of the NWDAF 2 may jointly indicate a QP address. Specifically, a port is indicated by using the port identifier, and a QP in the port is indicated by using the queue pair identifier. The source host address is an IP address of the NWDAF 2. The destination host address is an IP address of the NWDAF 3. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

The RDMA connection establishment information of the NWDAF 3 includes a port identifier and a queue pair identifier of the NWDAF 3. Optionally, the RDMA connection establishment information of the NWDAF 3 further includes one or more of access permission information, a source host address, a destination host address, a connection type, a service level, a protocol type, an operation mode, or a virtual memory address. For example, the port identifier of the NWDAF 3 includes a local identifier, or includes a local identifier and a global identifier. For example, the queue pair identifier may be a QPN. The port identifier and the queue pair identifier of the NWDAF 3 may jointly indicate a QP address. Specifically, a port is indicated by using the port identifier, and a QP in the port is indicated by using the queue pair identifier. The source host address is an IP address of the NWDAF 3. The destination host address is an IP address of the NWDAF 2. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

Step 1008: The NWDAF 2 and the NWDAF 3 establish an RDMA connection.

For a specific implementation process of establishing the RDMA connection between the NWDAF 2 and the NWDAF 3, refer to an implementation process of establishing an RDMA connection between two nodes in a conventional technology. Details are not described.

Step 1009: The NWDAF 2 and the NWDAF 4 exchange RDMA connection establishment information.

For example, if the NWDAF 1 sends indication information to the NWDAF 2, where the indication information indicates the NWDAF 2 to initiate establishment of the RDMA connection to the NWDAF 4. In this case, the NWDAF 2 sends a connection establishment request to the NWDAF 4, where the connection establishment request includes RDMA connection establishment information of the NWDAF 2, and then the NWDAF 4 sends a connection establishment response to the NWDAF 2, where the connection establishment response includes RDMA connection establishment information of the NWDAF 4. The connection establishment request and the connection establishment response may be transmitted based on an SBI protocol, a socket protocol, or a communication manager protocol. This is not limited in this application.

For another example, the NWDAF 1 sends indication information to the NWDAF 4, where the indication information indicates the NWDAF 4 to initiate establishment of the RDMA connection to the NWDAF 2. In this case, the NWDAF 4 sends a connection establishment request to the NWDAF 2, where the connection establishment request includes RDMA connection establishment information of the NWDAF 4, and then the NWDAF 2 sends a connection establishment response to the NWDAF 4, where the connection establishment response includes RDMA connection establishment information of the NWDAF 2. The connection establishment request and the connection establishment response may be transmitted based on an SBI protocol, a socket protocol, or a communication manager protocol. This is not limited in this application.

The RDMA connection establishment information of the NWDAF 2 includes a port identifier and a queue pair identifier of the NWDAF 2. Optionally, the RDMA connection establishment information of the NWDAF 2 further includes one or more of access permission information, a source host address, a destination host address, a connection type, a service level, a protocol type, an operation mode, or a virtual memory address. For example, the port identifier of the NWDAF 2 includes a local identifier, or includes a local identifier and a global identifier. For example, the queue pair identifier may be a QPN. The port identifier and the queue pair identifier of the NWDAF 2 may jointly indicate a QP address. Specifically, a port is indicated by using the port identifier, and a QP in the port is indicated by using the queue pair identifier. The source host address is an IP address of the NWDAF 2. The destination host address is an IP address of the NWDAF 4. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

The RDMA connection establishment information of the NWDAF 4 includes a port identifier and a queue pair identifier of the NWDAF 4. Optionally, the RDMA connection establishment information of the NWDAF 4 further includes one or more of access permission information, a source host address, a destination host address, a connection type, a service level, a protocol type, an operation mode, or a virtual memory address. For example, the port identifier of the NWDAF 4 includes a local identifier, or includes a local identifier and a global identifier. For example, the queue pair identifier may be a QPN. The port identifier and the queue pair identifier of the NWDAF 4 may jointly indicate a QP address. Specifically, a port is indicated by using the port identifier, and a QP in the port is indicated by using the queue pair identifier. The source host address is an IP address of the NWDAF 4. The destination host address is an IP address of the NWDAF 2. The connection type is a reliable connection, an unreliable connection, a reliable datagram, an unreliable datagram, or another type of connection. The service level is mainly for satisfying QoS requirements of RDMA services. In RDMA, different service levels reflect priorities of different services. The protocol type may be IB, RoCEv1, iWARP, or RoCEv2. The operation mode may be read (read), write (write), or send (send). The virtual memory address is a virtual address used by RDMA for communication in a work request. A channel adapter may convert the virtual address into a physical address.

Step 1010: The NWDAF 2 and the NWDAF 4 establish an RDMA connection.

For a specific implementation process of establishing the RDMA connection between the NWDAF 2 and the NWDAF 4, refer to an implementation process of establishing an RDMA connection between two nodes in a conventional technology. Details are not described.

Step 1011: The NWDAF 1 sends a request message to the NWDAF 2. Correspondingly, the NWDAF 2 receives the request message.

The request message is sent based on the RDMA protocol.

The request message is for requesting data from the NWDAF 2, where the data is data that needs to be collected by the NWDAF 2.

For example, the request message is Nnwdaf_AnalyticsSubscription_Subscribe_Request, or the request message is Nnwdaf_Analyticsinfo_Request.

Step 1012: The NWDAF 2 sends a request message to the NWDAF 3. Correspondingly, the NWDAF 3 receives the request message.

The request message is sent based on the RDMA protocol.

The request message is for requesting data from the NWDAF 3, where the data is data that needs to be collected by the NWDAF 3.

For example, the request message is Nnwdaf_AnalyticsSubscription_Subscribe_Request, or the request message is Nnwdaf_Analyticsinfo_Request.

Step 1013: The NWDAF 2 sends a request message to the NWDAF 4. Correspondingly, the NWDAF 4 receives the request message.

The request message is sent based on the RDMA protocol.

The request message is for requesting data from the NWDAF 4, where the data is data that needs to be collected by the NWDAF 4.

For example, the request message is Nnwdaf_AnalyticsSubscription_Subscribe_Request, or the request message is Nnwdaf_Analyticsinfo_Request.

Step 1014: The NWDAF 3 sends a response message to the NWDAF 2. Correspondingly, the NWDAF 2 receives the response message.

The response message is sent based on the RDMA protocol.

The response message includes data requested by the NWDAF 2.

For example, the response message is Nnwdaf_AnalyticsSubscription_Subscribe_Response, or Nnwdaf_Analyticsinfo_Response.

Step 1015: The NWDAF 4 sends a response message to the NWDAF 2. Correspondingly, the NWDAF 2 receives the response message.

The response message is sent based on the RDMA protocol.

The response message includes data requested by the NWDAF 2.

For example, the response message is Nnwdaf_AnalyticsSubscription_Subscribe_Response, or the request message is Nnwdaf_Analyticsinfo_Response.

Step 1016: The NWDAF 2 sends a response message to the NWDAF 1. Correspondingly, the NWDAF 1 receives the response message.

The response message is sent based on the RDMA protocol.

The response message includes data requested by the NWDAF 1, the data may be aggregated data, and the aggregated data is obtained by the NWDAF 2 by aggregating data received from the NWDAF 3 and the NWDAF 4.

For example, the response message is Nnwdaf_AnalyticsSubscription_Subscribe_Response, or the request message is Nnwdaf_Analyticsinfo_Response.

In the foregoing solution, segmental RDMA connections are established between a plurality of NWDAFs, so that data transmission is performed between the plurality of NWDAFs based on the RDMA protocol. On one hand, transmission of a large amount of data based on the SBI protocol is avoided, and therefore, real-time data or real-time signaling transmitted on a service-based bus is not affected. On the other hand, data transmission based on the RDMA protocol can reduce CPU load of the NWDAF, and can satisfy a low-latency and high-throughput requirement for data transmission.

It may be understood that, to implement the functions in the foregoing embodiments, the first network element or the network function network element includes corresponding hardware structures and/or software modules for performing each function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

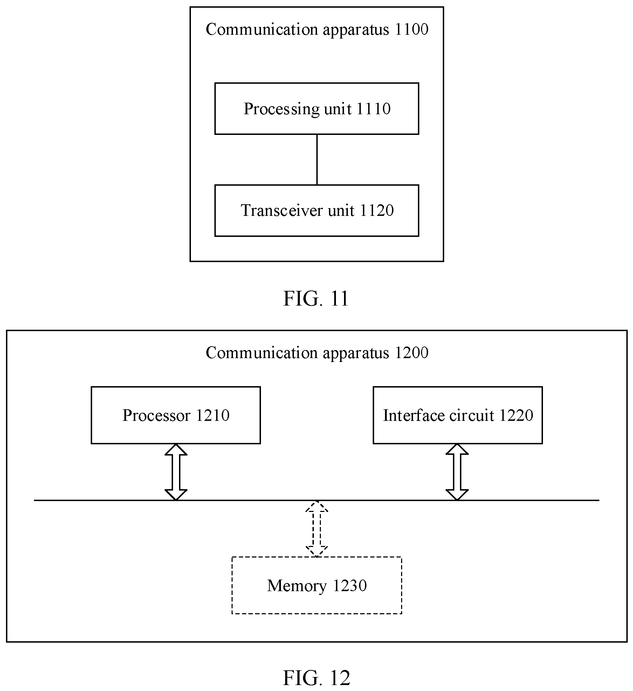

FIG. 11 and FIG. 12 are diagrams of structures of communication apparatuses according to embodiments of this application. The communication apparatuses may be configured to implement functions of the first network element or the network function network element in the foregoing method embodiments. Therefore, beneficial effects of the foregoing method embodiments can also be implemented. In embodiments of this application, the communication apparatus may be a first network element or a network function network element, or may be a module (for example, a chip) used in the first network element or the network function network element.

A communication apparatus 1100 shown in FIG. 11 includes a processing unit 1110 and a transceiver unit 1120. The communication apparatus 1100 is configured to implement a function of the first network element or the network function network element in the foregoing method embodiments.

When the communication apparatus 1100 is configured to implement a function of the first network element in the foregoing method embodiments, the processing unit 1110 is configured to: obtain RDMA information of a network function network element; and determine, based on the RDMA information of the network function network element, whether to use RDMA transmission.

In a possible implementation method, that the processing unit 1110 is configured to determine, based on the RDMA information of the network function network element, whether to use RDMA transmission specifically includes: determining, based on the RDMA information and service information, whether to use RDMA transmission, where the service information includes at least one of the following: a service analytics identifier, a service type, or a task priority.

In a possible implementation method, that the processing unit 1110 is configured to determine, based on the RDMA information of the network function network element, whether to use RDMA transmission specifically includes: determining, based on the RDMA information and status information of a CPU of the network function network element, whether to use RDMA transmission, where the status information of the CPU indicates a load status of the CPU.

In a possible implementation method, that the processing unit 1110 is configured to determine, based on the RDMA information of the network function network element, whether to use RDMA transmission specifically includes: obtaining, via the transceiver unit 1120, a load value of the CPU of the network function network element from the network function network element; and determining, based on the RDMA information and the load value of the CPU of the network function network element, whether to use RDMA transmission.

In a possible implementation method, the RDMA information includes one or more of the following information: whether the network function network element supports an RDMA protocol, an RDMA protocol type supported by the network function network element, or a bearer network type corresponding to the RDMA protocol type supported by the network function network element.

In a possible implementation method, the processing unit 1110 is further configured to: establish an RDMA connection between the first network element and the network function network element when determining to use RDMA transmission.

In a possible implementation method, that the processing unit 1110 is configured to establish the RDMA connection between the first network element and the network function network element when determining to use RDMA transmission specifically includes: when determining to use RDMA transmission, selecting, based on the service information and/or bearer network types corresponding to a plurality of RDMA protocol types supported by the network function network element, one RDMA protocol type from the plurality of RDMA protocol types supported by the network function network element, where the service information includes at least one of the following: the service analytics identifier, the service type, or the task priority; and establishing the RDMA connection between the first network element and the network function network element based on the selected RDMA protocol type.

In a possible implementation method, that the processing unit 1110 is configured to establish the RDMA connection between the first network element and the network function network element specifically includes: sending a connection establishment request to the network function network element based on a preset protocol type, where the connection establishment request includes RDMA connection establishment information of the first network element, and the preset protocol type is an SBI protocol, a socket protocol, or a communication manager protocol; receiving a connection establishment response from the network function network element based on the preset protocol type, where the connection establishment response includes RDMA connection establishment information of the network function network element; and establishing the RDMA connection between the first network element and the network function network element based on the RDMA connection establishment information of the first network element and the RDMA connection establishment information of the network function network element.

In a possible implementation method, the first network element is a data collection coordination function network element. The processing unit 1110 is further configured to establish an RDMA connection between the data collection coordination function network element and a network data analytics function network element.

In a possible implementation method, the first network element is a data collection coordination function network element. The transceiver unit 1120 is configured to: when determining to use RDMA transmission, notify a network data analytics function network element to initiate RDMA connection establishment to a messaging framework adapter function network element, and notify the messaging framework adapter function network element to initiate RDMA connection establishment to the network function network element.

In a possible implementation method, the first network element is a network repository function network element. The transceiver unit 1120 is configured to: when the processing unit 1110 determines to use RDMA transmission, send a list of network data analytics function network elements that support RDMA transmission to a first network data analytics function network element, where the list of network data analytics function network elements includes identification information of one or more network data analytics function network elements that support RDMA transmission.

In a possible implementation method, the transceiver unit 1120 is configured to send an RDMA indication to the first network data analytics function network element, where the RDMA indication indicates that a second network data analytics function network element in the list of network data analytics function network elements is an aggregator network data analytics function network element, or indicates the first network data analytics function network element to establish an RDMA connection to the second network data analytics function network element.

In a possible implementation method, that the processing unit 1110 is configured to obtain the RDMA information of the network function network element specifically includes: sending a request message to a network repository function network element via the transceiver unit 1120, where the request message includes indication information and identification information of the network function network element, and the indication information indicates to obtain the RDMA information of the network function network element; and receiving a response message from the network repository function network element via the transceiver unit 1120, where the response message includes the RDMA information.

When the communication apparatus 1100 is configured to implement a function of the network function network element in the foregoing method embodiments, the processing unit 1110 is configured to: send a registration request to a network repository function network element via the transceiver unit 1120, where the registration request includes identification information of the network function network element, a type of the network function network element, and RDMA information of the network function network element; and receive a registration response from the network repository function network element via the transceiver unit 1120, where the registration response indicates a registration success or a registration failure.

In a possible implementation method, the registration request further includes status information of a CPU of the network function network element, and the status information of the CPU indicates a load status of the CPU.

In a possible implementation method, the transceiver unit 1120 is further configured to send an update request to the network repository function network element when the status information of the CPU of the network function network element changes, where the update request includes updated status information of the CPU.

In a possible implementation method, the transceiver unit 1120 is further configured to: receive a subscription request from a first network element, where the subscription request is for requesting a load value of the CPU of the network function network element; and send the load value of the CPU of the network function network element to the first network element.

In a possible implementation method, the RDMA information includes one or more of the following information: whether the network function network element supports an RDMA protocol, an RDMA protocol type supported by the network function network element, or a bearer network type corresponding to the RDMA protocol type supported by the network function network element.

For more detailed descriptions about the processing unit 1110 and the transceiver unit 1120, directly refer to related descriptions in the foregoing method embodiments. Details are not described herein again.

A communication apparatus 1200 shown in FIG. 12 includes a processor 1210 and an interface circuit 1220. The processor 1210 and the interface circuit 1220 are coupled to each other. It can be understood that the interface circuit 1220 may be a transceiver or an input/output interface. Optionally, the communication apparatus 1200 may further include a memory 1230, configured to store instructions executed by the processor 1210, store input data required by the processor 1210 to run instructions, or store data generated after the processor 1210 runs instructions.

When the communication apparatus 1200 is configured to implement the foregoing method embodiments, the processor 1210 is configured to implement the functions of the processing unit 1110, and the interface circuit 1220 is configured to implement the functions of the transceiver unit 1120.

It may be understood that the processor in embodiments of this application may be a CPU, or may be another general-purpose processor, a digital signal processor (digital signal processor, DSP), an application-specific integrated circuit (application-specific integrated circuit, ASIC), a field-programmable gate array (field-programmable gate array, FPGA), another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in an access network device or a terminal device. Certainly, the processor and the storage medium may exist in the access network device or the terminal device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, an access network device, a terminal device, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

In this application, at least one means one or more, and a plurality of means two or more. A term "and/or" describes an association relationship between associated objects, and indicates that three relationships may exist. For example, A and/or B may indicate the following three cases: A exists alone, both A and B exist, and B exists alone, where A and B may be singular or plural. In the text descriptions of this application, the character "/" usually indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, applied to a first network element or a module of the first network element, wherein the method comprises:
obtaining remote direct memory access RDMA information of a network function network element; and
determining, based on the RDMA information of the network function network element, whether to use RDMA transmission.

2. The method according to claim 1, wherein determining, based on the RDMA information of the network function network element, whether to use RDMA transmission comprises:
determining, based on the RDMA information and service information, whether to use RDMA transmission, wherein
the service information comprises at least one of the following: a service analytics identifier, a service type, or a task priority.

3. The method according to claim 1, wherein determining, based on the RDMA information of the network function network element, whether to use RDMA transmission comprises:
determining, based on the RDMA information and status information of a CPU of the network function network element, whether to use RDMA transmission, wherein the status information of the CPU indicates a load status of the CPU.

4. The method according to claim 1, wherein determining, based on the RDMA information of the network function network element, whether to use RDMA transmission comprises:
obtaining a load value of the CPU of the network function network element from the network function network element; and
determining, based on the RDMA information and the load value of the CPU of the network function network element, whether to use RDMA transmission.

5. The method according to any one of claims 1 to 4, wherein the RDMA information comprises one or more of the following information:
whether the network function network element supports an RDMA protocol, an RDMA protocol type supported by the network function network element, or a bearer network type corresponding to the RDMA protocol type supported by the network function network element.

6. The method according to any one of claims 1 to 5, wherein the method further comprises:
establishing an RDMA connection between the first network element and the network function network element when determining to use RDMA transmission.

7. The method according to claim 6, wherein establishing the RDMA connection between the first network element and the network function network element when determining to use RDMA transmission comprises:
when determining to use RDMA transmission, selecting, based on the service information and/or bearer network types corresponding to a plurality of RDMA protocol types supported by the network function network element, one RDMA protocol type from the plurality of RDMA protocol types supported by the network function network element, wherein the service information comprises at least one of the following: the service analytics identifier, the service type, or the task priority; and
establishing the RDMA connection between the first network element and the network function network element based on the selected RDMA protocol type.

8. The method according to claim 6 or 7, wherein establishing the RDMA connection between the first network element and the network function network element comprises:
sending a connection establishment request to the network function network element based on a preset protocol type, wherein the connection establishment request comprises RDMA connection establishment information of the first network element, and the preset protocol type is an SBI protocol, a socket protocol, or a communication manager protocol;
receiving a connection establishment response from the network function network element based on the preset protocol type, wherein the connection establishment response comprises RDMA connection establishment information of the network function network element; and
establishing the RDMA connection between the first network element and the network function network element based on the RDMA connection establishment information of the first network element and the RDMA connection establishment information of the network function network element.

9. The method according to any one of claims 6 to 8, wherein the first network element is a data collection coordination function network element, and the method further comprises:
establishing an RDMA connection between the data collection coordination function network element and a network data analytics function network element.

10. The method according to any one of claims 1 to 5, wherein the first network element is a data collection coordination function network element, and the method further comprises:
when determining to use RDMA transmission, notifying a network data analytics function network element to initiate RDMA connection establishment to a messaging framework adapter function network element, and notifying the messaging framework adapter function network element to initiate RDMA connection establishment to the network function network element.

11. The method according to any one of claims 1 to 5, wherein the first network element is a network repository function network element, and the method further comprises:
when determining to use RDMA transmission, sending a list of network data analytics function network elements that support RDMA transmission to a first network data analytics function network element, wherein the list of network data analytics function network elements comprises identification information of one or more network data analytics function network elements that support RDMA transmission.

12. The method according to claim 11, wherein the method further comprises:
sending an RDMA indication to the first network data analytics function network element, wherein the RDMA indication indicates that a second network data analytics function network element in the list of network data analytics function network elements is an aggregator network data analytics function network element, or indicates the first network data analytics function network element to establish an RDMA connection to the second network data analytics function network element.

13. The method according to any one of claims 1 to 12, wherein obtaining the RDMA information of the network function network element comprises:
sending a request message to a network repository function network element, wherein the request message comprises indication information and identification information of the network function network element, and the indication information indicates to obtain the RDMA information of the network function network element; and
receiving a response message from the network repository function network element, wherein the response message comprises the RDMA information.

14. A communication method, applied to a network function network element or a module of the network function network element, wherein the method comprises:
sending a registration request to a network repository function network element, wherein the registration request comprises identification information of the network function network element, a type of the network function network element, and RDMA information of the network function network element; and
receiving a registration response from the network repository function network element, wherein the registration response indicates a registration success or a registration failure.

15. The method according to claim 14, wherein the registration request further comprises status information of a CPU of the network function network element, and the status information of the CPU indicates a load status of the CPU.

16. The method according to claim 15, wherein the method further comprises:
sending an update request to the network repository function network element when the status information of the CPU of the network function network element changes, wherein the update request comprises updated status information of the CPU.

17. The method according to any one of claims 14 to 16, wherein the method further comprises:
receiving a subscription request from a first network element, wherein the subscription request is for requesting a load value of the CPU of the network function network element; and
sending the load value of the CPU of the network function network element to the first network element.

18. The method according to any one of claims 14 to 17, wherein the RDMA information comprises one or more of the following information:
whether the network function network element supports an RDMA protocol, an RDMA protocol type supported by the network function network element, or a bearer network type corresponding to the RDMA protocol type supported by the network function network element.

19. A communication apparatus, comprising a module configured to perform the method according to any one of claims 1 to 13 or the method according to any one of claims 14 to 18.

20. A communication apparatus, comprising a processor and an interface circuit, wherein the processor is configured to: communicate with another apparatus through the interface circuit, and perform the method according to any one of claims 1 to 13, or perform the method according to any one of claims 14 to 18.

21. A computer program product, wherein the computer program product comprises instructions; and when the instructions are run on a processor, the processor is enabled to perform the method according to any one of claims 1 to 13 or the method according to any one of claims 14 to 18.

22. A computer-readable storage medium, wherein the storage medium stores a computer program or instructions; and when the computer program or the instructions are executed by a communication apparatus, the method according to any one of claims 1 to 13 is implemented, or the method according to any one of claims 14 to 18 is implemented.

23. A communication system, comprising:
a network function network element, configured to: send a registration request to a network repository function network element, wherein the registration request comprises identification information of the network function network element, a type of the network function network element, and RDMA information of the network function network element; and receive a registration response from the network repository function network element, wherein the registration response indicates a registration success or a registration failure; and
the network repository function network element, configured to: receive the registration request from the network repository function network element, and send the registration response to the network repository function network element.
